(19) Europäisches Patentamt
European Patent Office
Office européen des brevets

(11) **EP 2 945 033 B1**

(12) **EUROPÄISCHE PATENTSCHRIFT**

(45) Veröffentlichungstag und Bekanntmachung des Hinweises auf die Patenterteilung:
**10.10.2018 Patentblatt 2018/41**

(51) Int Cl.:
***G05B 19/409*** *(2006.01)* *G01N 35/00* *(2006.01)*
*B01L 3/02* *(2006.01)*

(21) Anmeldenummer: **14168144.5**

(22) Anmeldetag: **13.05.2014**

(54) **Verfahren zum Definieren eines Prozesses in einem Flüssigkeitshandhabungssystem**

Method for defining a process in a liquid handling system

Procédé destiné à définir un processus dans un système de manipulation de liquide

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.11.2015 Patentblatt 2015/47**

(73) Patentinhaber: **Tecan Trading AG**
**8708 Männedorf (CH)**

(72) Erfinder:
• **Kerkmann, Rainer**
**8630 Rüti (CH)**
• **Stäheli, Pascal**
**8620 Wetzikon (CH)**
• **Ho, The Vinh**
**8046 Zürich (CH)**

(74) Vertreter: **OK pat AG**
**Industriestrasse 47**
**6300 Zug (CH)**

(56) Entgegenhaltungen:
**EP-A1- 2 713 166     EP-A2- 1 191 312**
**DE-A1- 10 353 838**

**Beschreibung**

Die Erfindung betrifft Verfahren zum Definieren eines automatisierten Prozesses zum Ausführen in einem Flüssigkeitshandhabungssystem. Insbesondere geht es um Verfahren zum Ausführen in computergesteuerten Pipettiervorrichtungen und um das Ausführen eines Pipettierprozesses.

Hintergrund der Erfindung

Es gibt zahlreiche medizinische, biologische, chemische sowie pharmazeutische Geräte, bei denen es um den Einsatz von Flüssigkeiten geht. So gibt es zum Beispiel automatisierte Flüssigkeitshandhabungssysteme, um medizinische, biologische, physikalische und chemische Untersuchungen durchzuführen oder um Prozesse in diesen Gebieten auszuführen.

Heutzutage sind die meisten der automatisierten Flüssigkeitshandhabungssysteme sogenannte computergesteuerte Handhabungssysteme.

Ein typisches computergesteuertes Handhabungssystem umfasst einen Arbeitsbereich (Arbeitstisch) für das Abstellen von Behältern, einen motorisierten Pipettierrobotor und eine Steuerung (meist eine prozessor-basierte Steuerung). Der Pipettierrobotor umfasst mindestens eine Pipette zum Aspirieren und Dispensieren von flüssigen Proben. Häufig ist jede solche Pipette strömungstechnisch über eine individuelle Flüssigkeitsleitung mit einer ansteuerbaren Pumpe verbunden. Die Steuerung ist schaltungstechnisch mit dem Pipettierrobotor und der/den Pumpen verbunden. Durch den Einsatz eines Ablaufprogramms, das in der Steuerung ausgeführt wird, kann der Pipettierrobotor an eine bestimmte Position bewegt werden, um dort eine spezifische Handlung auszuführen. So kann zum Beispiel eine Pipette in einen Behälter abgesenkt werden, um dort eine Flüssigkeit aufzusaugen oder eine Flüssigkeit abzugeben.

Die einzelnen Vorgänge, die in einem Handhabungssystem ausgeführt werden, sind meist in Handlungsgruppen unterteilt. So gibt es zum Beispiel folgende Teilschritte: Aufnehmen einer Pipette, Spülen einer Pipette, Abwerfen einer Pipette, Aspirieren, Dispensieren oder Mischen einer Flüssigkeit unter Einsatz einer Pipette und das Dispensieren einer Flüssigkeit unter Einsatz einer Pipette.

Ein Beispiel eines solchen Handhabungssystems des vorliegenden Anmelders ist unter dem Namen Freedom EVO® im Markt bekannt.

Derartige Handhabungssysteme können mehr oder weniger komplex sein. Um die einzelnen Prozesse besser kontrollieren und ausführen zu können, gibt es eine Tendenz zur Quasi-Standardisierung einzelner Teilschritte und ganzer Prozesse.

Beim Definieren eines Prozesses wird der Nutzer durch eine grafische Benutzeroberfläche geführt und unterstützt. Man spricht in diesem Zusammenhang von dem Erstellen eines Skripts. Solche Skripte können direkt von einem Rechner umgesetzt und im Handhabungssystem ausgeführt werden, oder sie können für einen späteren Einsatz abgespeichert werden. Die Teilschritte eines Aspirier-Prozesses und eines Dispensier-Prozesses sind bisher meist als sogenannte Standard-Aktionen starr festgelegt.

Zum Beispiel ist aus dem US Patent 5,841,959 eine Nutzerschnittstelle (Benutzeroberfläche, GUI) bekannt, die es dem Nutzer ermöglicht einzelne Standard-Aktionen zu definieren, die anschliessend in einem Handhabungssystem ausgeführt werden sollen. So kann der Nutzer zum Beispiel als Standard-Aktionen das Aspirieren, Dispensieren und das Ab- und Aufwärtsbewegen einer Pipette festlegen. Dies geschieht anhand von Icons, die auf einem Bildschirm in die gewünschte chronologische Reihenfolge gebracht werden. Das US Patent 5,841,959 sieht auch das Ändern/Anpassen der Parameter einzelner Standard-Aktionen vor.

Aus dem Dokument DE 10353838 A1 ist ein automatisches Flüssigkeitshandhabungssystem mit einer Steuervorrichtung bekannt. Diese Steuervorrichtung schliesst eine Verteilungsdüsenanordnung-Berechnungseinheit und eine Reagensmengen- und Anordnungsberechnungseinheit ein. Die Verteilungsdüsenanordnung, die verwendete Reagensmenge und die Reagensanordnung werden aus der Information berechnet, die im Voraus bezüglich eines spezifischen Reagens, der Menge eines Reagens, das in ein Loch der Mikroplatte verteilt wird, des Bereichs der Löcher in der Mikroplatte, in welches das Reagens verteilt wird, und der Richtung eines Verteilens berechnet.

Aus dem Dokument EP 2 713 166 A1 ist ein Laborautomat und Verfahren zur automatischen Behandlung von Laborproben bekannt. Der Laborautomat weist ein Display mit erstem Displaybereich auf, über das die Eingabe von benutzerseitig erforderlichen Programmparametern erfolgt, und weist einen zweiten Displaybereich auf, in dem diese eingegebenen Programmparameter gezeigt werden. Die Durchführung der Behandlung erfolgt automatisch anhand der benutzerseitig erforderlichen Programmparameter.

Es besteht sowohl der Bedarf sich wiederholende Abläufe besser handhaben zu können als auch flexibel auf unterschiedliche Probenflüssigkeiten und Reagenzien respektive deren unterschiedliche physikalischen Eigenschaften reagieren zu können. Vor allem im Zusammenhang mit grösseren Versuchsreihen oder Untersuchungen ist dies von Bedeutung.

Daher werden in moderneren computergesteuerten Handhabungssystemen sogenannte Flüssigkeitsklassen (englisch: liquid classes) eingesetzt. Eine Flüssigkeitsklasse definiert diejenigen Parameter, die seitens der Steuerung beim Pipettieren einer spezifischen Flüssigkeit eingesetzt werden sollen. Das Wort Flüssigkeitsklasse ist eine Bezeichnung, die hier verwendet wird, obwohl andere Firmen andere Bezeichnungen für das Definieren flüssigkeitsspezifischer Parameter in einem Handhabungssystem verwenden. Heutige Flüssigkeitsklassen sind teilweise in sogenannte Unterklassen (englisch: subclasses) unterteilt. So kann es zum Beispiel je eine Unterklasse für die Pipettiervolumenbereiche 3 bis 15 $\mu$l, 15 bis 500 $\mu$l, 500 bis 1000 $\mu$l geben. Jede dieser Unterklassen hat typischerweise eigene Einstellungen. Das kann dazu führen, dass z.B. in der ersten Unterklasse für den Bereich 3 bis 15 $\mu$l eine andere Genauigkeitskorrektur (ein anderes Kalibrierverfahren) zur Anwendung kommt als in der nächsten Unterklasse mit dem Bereich 15 bis 500 $\mu$l. Bei einem Pipettiervolumen von 14,9 $\mu$l wird dann eine andere Korrektur angewendet als beim Pipettiervolumen von 15,1 $\mu$l. Dies führt an den Grenzen der Volumenbereiche zu Unstetigkeiten für die Genauigkeitskorrekturen.

In einer Flüssigkeitsklasse können zum Beispiel die Parameter für die Handhabung einer bestimmten Flüssigkeit, wie z. B. Bewegungsgeschwindigkeiten der Spritzen, Beschleunigungen, Genauigkeitskorrekturen, und/oder die Parameter für die Detektion des Flüssigkeitsniveaus (englisch: Liquid Level Detection, LLD), wie z. B. Sensitivität, Eintauchtiefe, und/oder die Parameter der Bewegungen des Pipettierrobotors, wie z.B. Geschwindigkeiten, Beschleunigungen, definiert sein.

Für kleine Anpassungen einer Flüssigkeitsklasse muss eine gegebene Flüssigkeitsklasse durch den Nutzer angepasst werden, was meist mit dem Kopieren einer vorhandenen Klasse, dem Ändern und Abspeichern unter einem neuen Namen verbunden ist. Das kann zu einer verwirrend grossen Vielzahl von leicht unterschiedlichen Flüssigkeitsklassen führen, die in einem Handhabungssystem vorgehalten werden. Verwechslungen und Probleme sind daher nicht auszuschliessen.

Jede Flüssigkeit, die in einem Handhabungssystem eingesetzt werden soll, braucht eine entsprechende Flüssigkeitsklasse respektive Parameter, um die Genauigkeit und Reproduzierbarkeit des Pipettierens dieser Flüssigkeit zu gewährleisten.

Heutige Handhabungssysteme werden bereits mit einigen Standardvorgaben in Form von grundlegenden Flüssigkeitsklassen (z.B. für Wasser, Blutserum, Ethanol und so weiter) und mit Standard-Aktionen geliefert. Eine Flüssigkeitsklasse kann zahlreiche Parameter (teilweise mehr als 30 Parameter) haben, die bei Bedarf durch den Nutzer angepasst werden können. Flüssigkeitsklassen bekannter Handhabungssysteme erlauben eine Unterscheidung oder Auswahl nach dem Typus der verwendeten Pipette, wie z.B. beschichtete Stahlkanülen, Wegwerfspitzen verschiedener Volumina, und dem zu pipettierenden Pipettiervolumen. Weiterhin kann man innerhalb der Flüssigkeitsklassen die Parameter (wie z.B. die Aspirationsgeschwindigkeit) für das Aspirieren und die Parameter (wie z.B. die Dispensionsgeschwindigkeit) für das Dispensieren definieren. Häufig ist es auch möglich, Angaben zu einem Kalibrierverfahren zu machen, das für die Genauigkeit des Pipettiervorgangs wichtig ist.

Jede der Flüssigkeitsklassen umfasst somit eine Reihe von Parametern, die allesamt statisch sind, wobei z.B. für ein erstes Flüssigkeitsvolumen von 3 bis 15 $\mu$l andere statische Parameter vorgegeben werden als bei einem grösseren Flüssigkeitsvolumen von z.B. 15 bis 500 $\mu$l, wie bereits erwähnt.

Das Vorgeben der einzelnen Parameter ist teilweise sehr zeitaufwendig, kompliziert und fehleranfällig. Es gibt viele Zusammenhänge und Gesetzmässigkeiten, die berücksichtigt werden müssen. Dabei geht es unter anderem um den Flüssigkeitstypus, um das Flüssigkeitsvolumen (Pipettiervolumen genannt), das pipettiert werden soll, um den Pipettentyp, um die Gesamtkonfiguration des Handhabungssystems und um andere Einflussgrössen.

Letztendlich geht es darum, dass Handhabungssysteme eine Definition der einzelnen Teilschritte brauchen, um genau arbeiten zu können. Die Definition der einzelnen Teilschritte hängt jedoch von Aspekten ab wie den Eigenschaften der Flüssigkeit (Viskosität, Oberflächenspannung, Dichte, Dampfdruck), der aktuellen Hardware-Konfiguration, den Grenzen dieser Hardware, den Bedürfnissen des einzelnen Prozessschrittes und von Umgebungseinflüssen (Druck, Temperatur etc.).

Es stellt sich daher die Aufgabe, die Steuerung eines Handhabungssystems möglichst flexibel und einfach mit den erforderlichen Informationen zu versorgen, damit die nahezu unendliche Anzahl von Kombinationen durch den Nutzer ausgeschöpft werden kann. Dabei soll die Lösung auf dem existierenden Konzept der Flüssigkeitsklassen und/oder Standardaktionen aufbauen.

Gemäss Erfindung wird eine Art Programmierebene oder Programmierumgebung (im Sinne einer logischen Ebene) vorgesehen, die in einer Programmierebene oberhalb der eigentlichen Flüssigkeitsklassen oder Standardaktionen stehen kann, falls weiterhin Flüssigkeitsklassen oder Standardaktionen eingesetzt werden. Je nach Ausführungsform der Erfindung kann die neue Programmierebene oder Programmierumgebung aber auch ohne die Verwendung von Flüssigkeitsklassen oder Standardaktionen ausgeführt sein.

Die zusätzliche Programmierebene, die hier als Mikroskriptebene bezeichnet wird, erlaubt es dem Nutzer, Parameter und auch mechanische Aktionen einem Teilschritt und/oder einer Standardaktion (z.B. einem Aspirier-Prozess) und/oder einer Flüssigkeit (z.B. über den Einsatz einer Flüssigkeitsklasse) zuzuordnen. Die Skripte der Erfindung erhalten daher weitere Freiheitsgrade im Vergleich zu den bisherigen Standardaktion oder Flüssigkeitsklassen.

Gemäss Erfindung wird vor dem Ausführen eines Prozesses in einem Handhabungssystem die Information, die innerhalb der Programmierebene oder Programmierumgebung definiert wurde, in eine geeignete Sequenz Firmwarekommandos (Maschinenkommandos) umgesetzt, die von der Hardware des Handhabungssystems verarbeitbar ist. Entweder werden vor dem Ausführen eines Prozesses die notwendigen Parameter so bereit gestellt, dass sie von der vorhandenen Firmware abgearbeitet/interpretiert werden können. Oder es wird jeweils ein Code in einer geeigneten Form erstellt, der von der Hardware des Handhabungssystems abgearbeitet/interpretiert werden kann.

Die entsprechende Benutzeroberfläche kann auf der Mikroskriptebene vorzugsweise bei allen Ausführungsformen die typischen Elemente einer modernen grafischen Oberfläche umfassen. So können zum Beispiel Drag-und-Drop Aktionen zugelassen werden, um auf der neuen Mikroskriptebene einzelne Parameter zu definieren oder um Teilschritte zu definieren oder um Teilschritte chronologisch in Bezug zu setzen (Ablaufplanung oder auf Englisch scheduling genannt).

Diese Ablaufplanung erfolgt vorzugsweise bei allen Ausführungsformen mit einem zeitlichen und räumlichen Bezug zu den Prozessschritten und Abläufen im Handhabungssystem.

Bei einem Mikroskript, im Sinne der vorliegenden Erfindung, handelt es sich um eine Art Pseudo-Code, der aufgrund seiner Struktur für den Nutzer lesbar sein kann. In den meisten computergesteuerten Handhabungssystemen muss ein Skript oder Mikroskript in eine Art Maschinensprache (Firmware genannt) umgesetzt werden, damit die Steuerung des Handhabungssystems die einzelnen Motoren, Pumpen und anderen Elemente steuern kann, oder das Skript oder Mikroskript muss über eine Schnittstelle die erforderlichen Parameter an eine Firmware übergeben, damit ein computergesteuertes Handhabungssystem arbeiten kann.

Bei allen Ausführungsformen kann das Verfahren der Erfindung so festgelegt sein, dass es beim Anbieten von Menüpunkten, Icons, Parametern oder Auswahlmöglichkeiten auf der Mikroskriptebene bereits aufgrund der aktuell vorhandenen Hardware des Handhabungssystems eine einschränkende Auswahl vorgenommen hat. D.h. eine solche Lösung aus einer Kombination einer Steuerung, einer Benutzeroberfläche und der Hardware des Handhabungssystems bietet in diesem bevorzugten Fall nur solche Menüpunkte Icons, Parameter oder Auswahlmöglichkeiten auf der Mikroskriptebene an, die in der gegebenen Konstellation möglich oder sinnvoll sind. Der Nutzer kann somit vorzugsweise nur solche Mikroskripte auswählen und/oder Parameter ändern, die aufgrund der momentan vorhandenen Hardware zulässig sind.

Bei allen Ausführungsformen kann das Verfahren der Erfindung dem Nutzer eine Möglichkeit einräumen einzelne Aspekte (z.B. Parameter) auf der Mikroskriptebene zu editieren, zu ergänzen oder zu definieren.

Gemäss Erfindung geht es vorzugsweise bei allen Ausführungsformen um eine flexible Parametrisierung der Flüssigkeitsklassen. Gemäss Erfindung kann der Nutzer somit vorzugsweise bei allen Ausführungsformen die Parameter und die mechanischen Schritte einer Flüssigkeitsklasse festlegen.

Vorzugsweise wird bei allen Ausführungsformen auf der Mikroskriptebene ein Prozess Schritt für Schritt durch das chronologische hintereinander Stellen von Teilschritten definiert. Die Teilschritte können dabei dynamisch voneinander abhängig sein.

Gemäss Erfindung ermöglichen vorzugsweise alle Ausführungsformen unterhalb eines Oberbegriffs, der einen Prozess definiert, das chronologische Aneinanderreihen von Teilschritten, wobei mindestens ein Parameter des entsprechenden Mikroskripts nicht als fixer Wert sondern als Funktion, respektive Formel definiert ist.

Gemäss Erfindung ist vorzugsweise bei allen Ausführungsformen eine Flüssigkeitsklasse auf der Mikroskriptebene keine statische Parametermenge mehr, sondern die Flüssigkeitsklasse umfasst auf der Mikroskriptebene mehrere Teilschritte, die miteinander kombiniert und dynamisch voneinander abhängig sind (z.B. durch den Einsatz einer verknüpfenden Funktion oder Formel).

Gemäss Erfindung kann man vorzugsweise bei allen Ausführungsformen mehrere Teilschritte zu einem Teilprozess zusammenfassen, wobei diese Teilschritte dynamisch miteinander verknüpft sind. Die Änderung eines Parameters pflanzt sich aufgrund der dynamischen Verknüpfung automatisch auf mindestens einen anderen Teilschritt fort.

Gemäss Erfindung werden vorzugsweise bei allen Ausführungsformen die Teilschritte eines Mikroskripts auf der Mikroskriptebene angepasst, nachdem sich eine Änderung in einem der Teilschritte des Mikroskripts ergeben hat. Wenn z.B. sich ein Parameter eines Teilschritts ändert, so können optional alle anderen Teilschritte dieses Mikroskripts automatisch angepasst werden, soweit eine gegenseitige Abhängigkeit zwischen diesen Teilschritten besteht.

Gemäss Erfindung kann vorzugsweise bei allen Ausführungsformen einer oder mehrere der folgenden Teilschritte in vordefinierter Form bereitgestellt werden (z.B. durch Vermittlung einer grafischen Benutzeroberfläche):

- Aspirieren von Luft,
- absolute Bewegung,
- relative Bewegung,
- Detektieren des Flüssigkeitsniveaus (liquid level detection, LLD),
- Aspirieren von Flüssigkeit,
- Überwachen des Aspirierens
- Dispensieren von Flüssigkeit,

- Dispensieren von Luft,
- Flüssigkeiten Mischen durch mehrfaches Aspirieren und wieder Zurückdispensieren,
- Wegwerfspitzen Aufnehmen und Abwerfen,
- Pipetten Waschen,
- usw.

Diese beispielhafte Liste kann gemäss Erfindung vorzugsweise bei allen Ausführungsformen erweiterbar sein, was z.B. hilfreich sein kann, wenn die existierende Hardware des Handhabungssystems erweitert/ergänzt wurde. Wenn ein Handhabungssystem, das bisher mit einer kapazitiv arbeitenden Lösung zum Detektieren des Flüssigkeitsniveaus ausgestattet ist, durch eine druckbasierte Detektion des Flüssigkeitsniveaus erweitert wird, so kann zum Beispiel ein Teilschritt in Form eines Mikroskripts zur druckbasierten Detektion bereitgestellt/geladen werden (z.B. durch Vermittlung einer grafischen Benutzeroberfläche).

Bei allen Ausführungsformen kann das Verfahren der Erfindung so festgelegt sein, dass man nicht mehr mit starren Flüssigkeitsklassen arbeitet, sondern dass beim Erstellen eines Mikroskripts eine Standardaktion in Teilschritte zerlegt werden kann.

Bei allen Ausführungsformen kann das Verfahren der Erfindung ein Simulationsverfahren umfassen. Im Rahmen eines solchen Simulationsverfahrens werden eine Standardaktion und/oder dessen Teilschritte virtuell ausgeführt. Das ermöglicht es dem Nutzer, bei entsprechender begleitender Darstellung auf einem Bildschirm einen Plausibilitätscheck durchzuführen und gegebenenfalls Anpassungen vorzunehmen.

Die vorliegende Erfindung lässt sich nicht nur in proprietären Handhabungssystemen, sondern auch in offenen Handhabungssystemen anwenden.

Durch den Einsatz der vorliegenden Erfindung kann die Flexibilität existierender und zukünftiger Handhabungssysteme verbessert werden.

Die Erfindung basiert unter anderem auf der Erkenntnis, dass die heutigen Flüssigkeitsklassen aufgrund ihrer flachen hierarchischen Struktur schnell unübersichtlich werden. Die Erfindung geht daher den Weg eine tiefere hierarchische Struktur (auch geschachtelte Struktur genannt) vorzugeben, die intuitiver und einfacher ist.

Gemäss Erfindung ist der gesamte Ansatz modular. Die Parameter einzelner Teilschritte können sich automatisch anpassen, falls derselbe und/oder ein anderer Parameter im selben und/oder einem anderen Teilschritt verändert wurde.

Die Erfindung bezieht sich insbesondere auf Verfahren für das Durchführen von analytischen und synthetischen Analysen und anderen Prozeduren, wie sie in sogenannten Flüssigkeitshandhabungssystemen (im Folgenden kurz Handhabungssysteme genannt) durchgeführt werden.

Insbesondere bezieht sich die Erfindung auf genetische und/oder biochemische und/oder chemische und/oder physikalische Prozessschritte, die in solchen Handhabungssystemen automatisiert, d.h. unter Einsatz/Kontrolle einer Steuerung, ausgeführt werden. Die Prozessschritte können z.B. in einem Zusammenhang stehen mit der Analyse, Synthese und Aufreinigung.

Die erfindungsgemäßen Flüssigkeitshandhabungssysteme und die erfindungsgemäße Verfahren werden nun an Hand von schematischen, den Umfang der Erfindung nicht beschränkenden Zeichnungen von beispielhaften Ausführungsformen im Detail erläutert.

Fig. 1     zeigt eine schematische Seitenansicht eines ersten Handhabungssystems mit vier Kanälen und einer Mikroplatte mit Behältern (Wells);

Fig. 2     zeigt eine schematische Seitenansicht eines weiteren Handhabungssystems mit zwei Kanälen und zwei Behältern auf einem Arbeitstisch;

Fig. 3     zeigt eine schematische Ansicht eines Handhabungssystems mit einer grafischen Benutzeroberfläche und einem externen Rechner gemäß einer Ausführungsform der Erfindung;

Fig. 4     zeigt eine schematische Ansicht eines Handhabungssystems mit einer grafischen Benutzeroberfläche und einem Rechner gemäss einer Ausführungsform der Erfindung;

Fig. 5     zeigt eine schematische Ansicht einer Sigmoid-Funktion;

Fig. 6     zeigt eine schematische Ansicht einer grafischen Benutzeroberfläche einer weiteren Ausführungsform der Erfindung;

Fig. 7     zeigt ein Flussdiagramm einer Ausführungsform eines Verfahrens der Erfindung;

Fig. 8     zeigt ein Flussdiagramm einer Ausführungsform eines weiteren Verfahrens der Erfindung;

Fig. 9     zeigt ein Flussdiagramm einer Ausführungsform eines weiteren Verfahrens der Erfindung;

Fig. 10    zeigt ein Flussdiagramm einer Ausführungsform eines weiteren Verfahrens der Erfindung;

Fig. 11A   zeigt eine Ansicht einer grafischen Oberfläche der Erfindung während eines ersten Aspirier-Schrittes sowie rechts davon eine Pipette oberhalb eines Behälters;

Fig. 11B   zeigt eine Ansicht der grafischen Oberfläche der Fig. 11A während eines zweiten Aspirier-Schrittes und die Pipette beim Aspirieren von Luft;

Fig. 11C zeigt eine Ansicht der grafischen Oberfläche der Fig. 11A während eines dritten Aspirier-Schrittes und die Pipette, die zum kapazitiven Detektieren des Flüssigkeitsniveaus im Behälter bereit gemacht wurde;

Fig. 11D zeigt eine Ansicht der grafischen Oberfläche der Fig. 11A während eines vierten Aspirier-Schrittes beim LLD-überwachten Aspirieren von Flüssigkeit aus dem Behälter;

Fig. 11E zeigt eine Ansicht der grafischen Oberfläche der Fig. 11A während eines fünften Aspirier-Schrittes beim LLD-überwachten Zurückziehen der Pipette aus dem Behälter;

Fig. 11F zeigt eine Ansicht der grafischen Oberfläche der Fig. 11A während eines sechsten Aspirier-Schrittes und die Pipette beim Aspirieren von Luft;

Fig. 12 zeigt eine Ansicht einer grafischen Oberfläche einer bekannten Lösung, die zum Definieren von Parametern vorgesehen ist, sowie rechts davon eine Pipette im Schnitt.

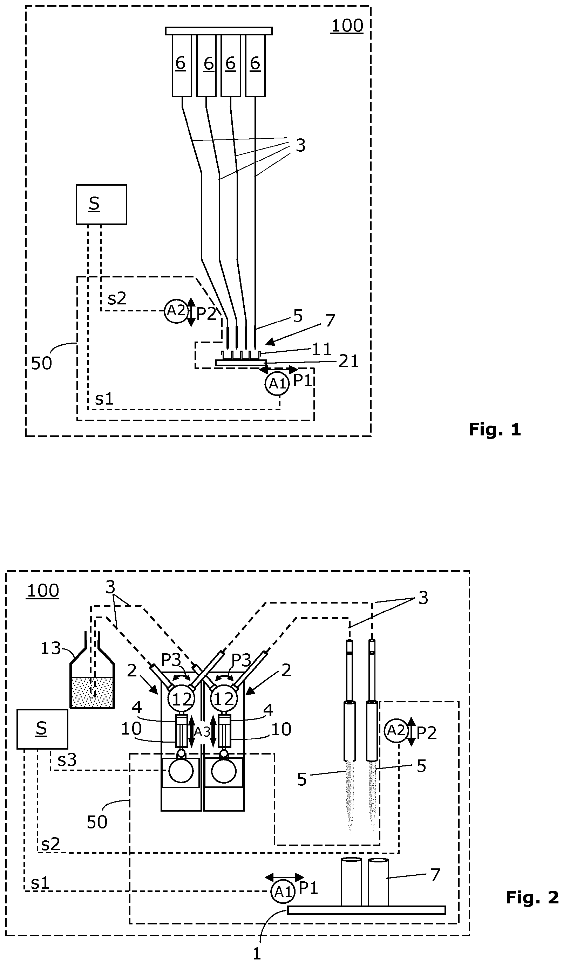

Die Figur 1 zeigt ein als Dispenser ausgeführtes Handhabungssystem 100, das hier vier parallele Kanäle zur Abgabe von Flüssigkeiten aufweist. Jeder Kanal hat eine Leitung 3, die mit einem Auslasselement 5 verbunden ist. Die Auslasselemente 5 können beispielsweise so angeordnet sein, dass sie einen Abstand zueinander haben, der dem Achsabstand der Wells einer Mikroplatte 11 entspricht. Die Mikroplatte 11 kann in einer Probenhalterung 21 angeordnet sein, die (einzeln oder samt eines Arbeitstisches) motorisiert horizontal bewegt werden kann, wie in Fig. 1 durch den Doppelpfeil P1 angedeutet. Zusätzlich oder alternativ können auch die Auslasselemente 5 motorisiert bewegt werden, wie in Fig. 1 durch den Doppelpfeil P2 angedeutet. Die entsprechenden Antriebe werden hier mit A1 und A2 gekennzeichnet.

Die Figur 2 zeigt ein weiteres als Pipettierer ausgeführtes Handhabungssystem 100, das hier zwei einzelne Kanäle zur Abgabe von Flüssigkeiten aufweist. Jeder Kanal hat wiederum je eine Leitung 3, die an einem Ende mit einer Pipette 5 verbunden ist. Am anderen Ende kann pro Kanal je eine Spritzenpumpe 2 vorgesehen sein. Eine solche Spritzenpumpe 2 umfasst je einen Antrieb A3, der dazu ausgelegt ist einen Kolben 4 in einem Spritzenzylinder präzise nach oben oder unten zu bewegen. Das Bewegen der Kolben 4 wird vertikale Doppelpfeile angedeutet, die mit A3 beschriftet sind. Jede Spritzenpumpe 2 umfasst ferner ein Dreiwegeventil 12, das dazu ausgelegt ist, die Pipette 5 entweder mit der Spritzenpumpe 2 zum Aspirieren und Dispensieren fluidisch zu verbinden oder die Pipette 5 mit einem Systemflüssigkeitsbehälter 13 mit Systemflüssigkeit zum Spülen der Pipetten 5 zu verbinden. Die Drehbewegung des Ventils 12 ist in Fig. 2 durch die Doppelpfeile P3 dargestellt.

Die Pipetten 5 sind hier beispielsweise so angeordnet, dass sie einen Abstand zueinander haben, der dem Achsabstand zweier Behälter 7 entspricht, die (einzeln oder samt eines Arbeitstisches 1) motorisiert horizontal bewegt werden können, wie in Fig. 2 durch den Doppelpfeil P1 angedeutet. Zusätzlich oder alternativ können auch die Pipetten 5 motorisiert bewegt werden, wie in Fig. 2 durch den Doppelpfeil P2 angedeutet. Die entsprechenden Antriebe werden hier mit A1 und A2 gekennzeichnet.

Bei den Auslasselementen 5 kann es sich bei allen Ausführungsformen der Erfindung um einzelne Pipetten, Röhrchen, Spritzen, Hohlnadeln, Leitungen oder dergleichen handeln. Zwei oder mehr als zwei Auslasselemente 5 können bei allen Ausführungsformen auch in Gruppen (z.B. als Pipettengruppen) zusammengefasst sein.

Die Handhabungssysteme 100 der Erfindung haben in allen Ausführungsformen einen entsprechenden Bewegungsapparat 50, wie in den Figuren 1 und 2 angedeutet. Dabei ist zu beachten, dass es letztendlich um Relativbewegungen geht, die im Zusammenhang mit dem Aspirieren und/oder Dispensieren erforderlich sind. Es können bei allen Ausführungsformen entweder nur einzelne Auslasselemente 5 (oder Auslasselementegruppen) oder nur die Behälter 7 (z.B. die Mikroplatte 11 in Fig. 1 oder ein Arbeitstisch 1 in Fig. 2) bewegt werden. Vorzugsweise ermöglicht der Bewegungsapparat 50 eines Handhabungssystems 100 eine Kombination aus Bewegungen einzelner Auslasselemente 5 (oder Auslasselementegruppen) und der Behälter 7 (z.B. die Mikroplatte 11 in Fig. 1 oder der Arbeitstisch 1 in Fig. 2). Details hierzu sind z.B. aus EP0259386 hinlänglich bekannt.

Die Bewegungen P1 und/oder P2 und/oder P3 eines solchen beispielhaften Handhabungssystems 100 sind vorzugsweise über eine Steuerung S gesteuert, welche z.B. auch die Abgabe von Flüssigkeit aus den (Vorrats-) Behältern 6 (wie in Fig. 1 gezeigt) steuern kann. Die Steuerverbindungen zwischen der Steuerung S und den entsprechenden Antrieben des Bewegungsapparats 50 sind in schematischer Form in Fig. 1 durch die Steuerleitungen s1 und s2 und in Fig. 2 durch die Steuerleitungen s1, s2 und s3 angedeutet.

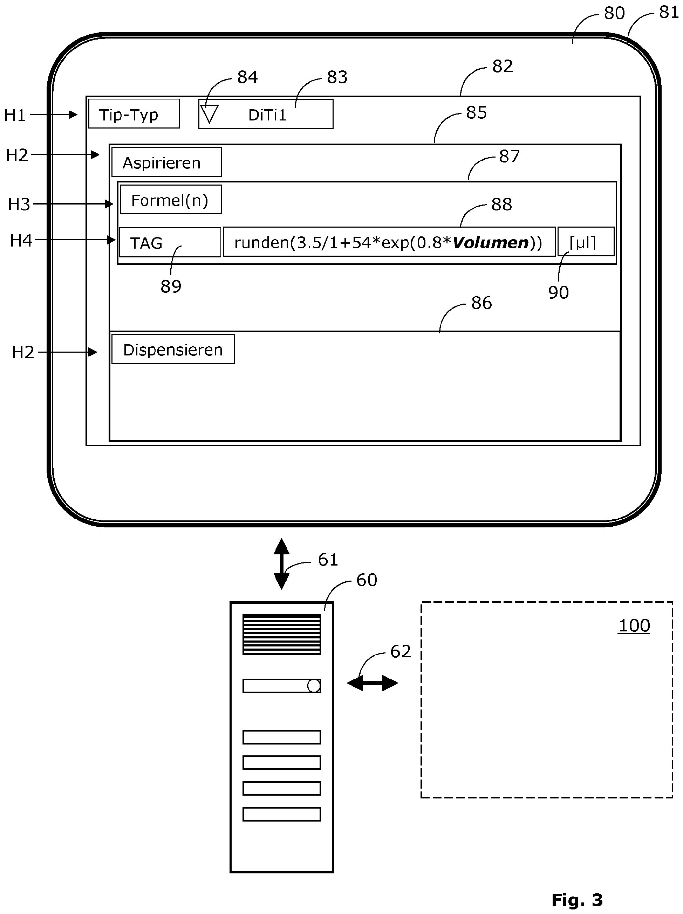

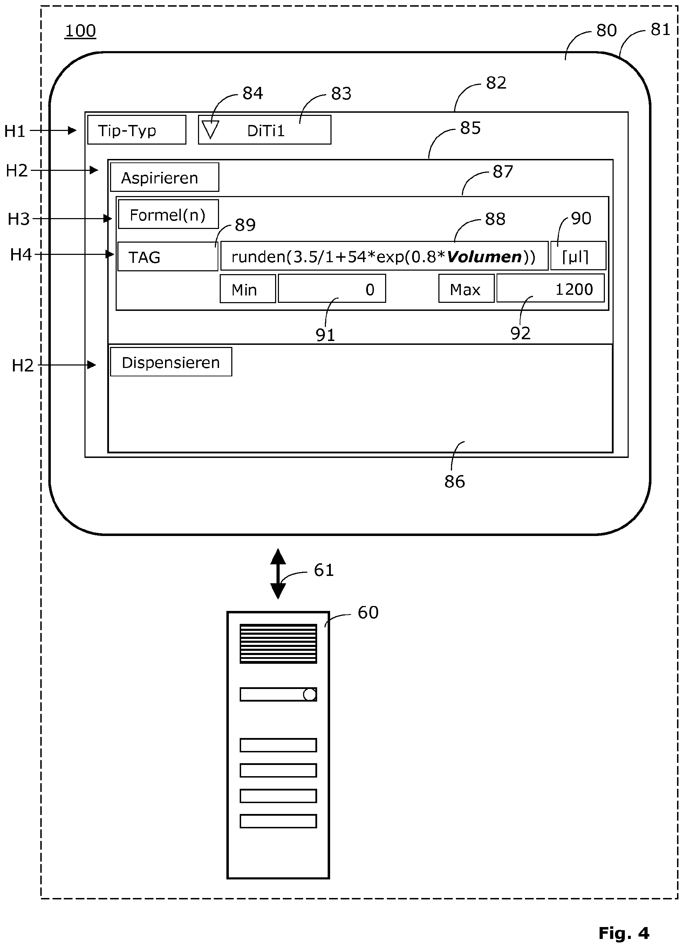

Vorzugsweise umfasst eine solche Steuerung S bei allen Ausführungsformen mindestens einen Prozessor und eine entsprechende Software (z.B. als Firmware). Die Steuerung S kann bei allen Ausführungsformen Teil eines externen oder internen Rechners 60 sein (siehe Fig. 3 und 4).

Die Steuerung S kann bei allen Ausführungsformen auch mehrere Software- und/oder Hardware-Module umfassen, wobei z.B. eines der Module die Handhabung der erfindungsgemässen Mikroskripte vornimmt. Letztendlich geht es beim Zusammenwirken der Steuerung S und des Bewegungsapparats 50 darum, in einem Handhabungssystem 100 das Ausführen einzelner Schritte auszulösen, die Schritte auszuführen und die Ausführung zu überwachen.

Gemäss Erfindung werden bei bevorzugten Ausführungsformen die Teilschritte eines Mikroskripts auf der Mikroskriptebene automatisch angepasst, wenn sich eine Änderung in einem der Teilschritte des Mikroskripts ergibt. Wenn sich z.B. ein Parameter eines Teilschritts ändert, so können bei Bedarf alle anderen Teilschritte dieses Mikroskripts automatisch angepasst werden, soweit eine gegenseitige Abhängigkeit zwischen mindestens zwei Teilschritten besteht. Diese dynamische Verknüpfung wird im Folgenden anhand von vereinfachten Beispielen erläutert.

Wenn im Rahmen eines Prozesses ein grösseres Flüssigkeitsvolumen (hier Pipettiervolumen genannt) aspiriert werden soll, so kann die Steuerung S bei einer bevorzugten Ausführungsform automatisch ein geeignetes grösseres Auslasselement 5 wählen, das in dem Handhabungssystem 100 zur Verfügung steht. Die Auswahl eines grösseren Auslasselements 5 kann bei allen Ausführungsformen aber auch manuell durch den Nutzer oder halbautomatisch erfolgen.

Ein grösseres Auslasselement 5 (z.B. eine Pipette) zeigt aufgrund der anderen geometrischen Form ein anderes Verhalten beim Aspirieren. Der Teilschritt des Aspirierens wird gemäss Erfindung also entsprechend dynamisch angepasst. Falls nun in einem nachgelagerten Teilschritt des Prozesses der Bewegungsapparat 50 das Auslasselement 5 aufwärts bewegen soll, bevor dann das Auslasselement 5 eine horizontale Bewegung ausführt, so muss der Teilschritt des Aufwärtsbewegens mit anderen Parametern arbeiten als dies bei einer kleineren Pipette 5 der Fall wäre. Einfach ausgedrückt kann es nun erforderlich sein einen grösseren Aufwärtshub zu fahren als zuvor, da die grosse Pipette 5 länger ist als die kleinere Pipette 5. Eine Anpassung des Parameters, der den Aufwärtshub definiert, wird gemäss Erfindung automatisch vorgenommen.

Im Folgenden ist ein weiteres einfaches Beispiel erläutert.

Beim Pipettieren kann ein "Luftpfropfen" (in Englisch trailing airgap TAG genannt) eingesetzt werden. Ein Luftpfropfen kann verhindern, dass eine Flüssigkeit unbeabsichtigt aus einem Auslasselement 5 heraus tropft. Die Länge des Luftpfropfens in dem Auslasselement 5 hat jedoch eine Abhängigkeit von der Grösse (dem Volumen und/oder der Geometrie) des Auslasselements 5. Zum Bewegen des Luftpfropfens müssen daher in Abhängigkeit vom Typus des Auslasselements entsprechend andere Parameter vorgegeben werden. Wenn man also in einem nachgelagerten Teilschritt ein kleines Pipettiervolumen dispensieren möchte, so muss mit einem anderen Bewegungsprofil die Flüssigkeit samt des Luftpfropfens in Richtung Ausgang des Auslasselements bewegt werden. Es muss somit eine Anpassung des Parameters vorgenommen werden, der das Aspirieren und/oder Dispensieren definiert. Vorzugsweise wird gemäss Erfindung bei allen Ausführungsformen automatisch eine Anpassung dieses/dieser Parameters/Parameter vorgenommen. Falls Aspekte des Aspirierens und/oder Dispensierens als Funktion des Auslasselementtyps und/oder des Volumens und/oder der Geometrie definiert sind, erfolgt eine automatische Anpassung.

Vorzugsweise wird bei allen Ausführungsformen der Luftpfropfen als Funktion des Auslasselementtyps und/oder des Volumens und/oder der Geometrie definiert.

Fig. 3 zeigt eine schematische Ansicht einer grafischen Benutzeroberfläche 80 einer Ausführungsform der Erfindung, wobei diese grafische Benutzeroberfläche 80 über einen Rechner 60 mit einem Handhabungssystem 100 verbunden ist. Als Rechner 60 wird hier jede Form von System bezeichnet, das mindestens einen Prozessor, einen Speicher und Software umfasst. Gezeigt ist der Rahmen eines Computerbildschirms 81. Anstelle eines Computerbildschirms 81 können auch andere grafische Ausgabegeräte wie Touch Screens, Smart Phones oder Tablet Computer verwendet werden. Im dargestellten Moment wird eine grafische Auswahlstruktur 82 angezeigt. Die tiefe hierarchische Struktur ist hier wie folgt gewählt worden. In einer ersten Hierarchieebene H1 kann im gezeigten Beispiel der Typ des Auslasselements ausgewählt und/oder definiert werden. Im gezeigten Beispiel wird ein Aktionsmenü 83 vorgegeben, das man durch das Klicken auf den nach unten weisenden Pfeil 84 ausklappen kann, um eine Reihe von Auslasselementtypen anzeigen zu lassen und auszuwählen. Auf diesem Wege wurde hier der Pipetten-Typ DiTi1 ausgewählt.

Weiterhin zeigt die beispielhafte Benutzeroberfläche 80 zwei hierarchisch untergeordnete Menüs (hier als Untermenüs 85, 86 bezeichnet), die hier mit Aspirieren und mit Dispensieren bezeichnet sind. Die beiden Untermenüs 85, 86 sind einer zweiten Hierarchieebene H2 zugeordnet.

In dem Untermenü 85 ist eine Formel-Untermenü 87 auf der dritten Hierarchieebene H3 vorgesehen. Hier kann mindestens ein Formelfeld 88 auf einer vierten Hierarchieebene H4 vorgegeben sein, wie in Fig. 3 beispielhaft gezeigt. Das Formel-Untermenü 87 zeigt hier beispielsweise einen Formelnamen 89 gefolgt von dem Formelfeld 88 und von einer Masseinheit 90. Der Formelname TAG steht für den Trailing Airgap, was nachfolgender Luftpfropfen bedeutet, wie bereits erwähnt. Das Formelfeld 88 kann ein durch den Nutzer frei editierbares Feld sein oder es kann z.B. ein Feld mit Vorgaben sein, die durch den Nutzer angepasst werden können. Im gezeigten Beispiel ist der Luftpfropfen als eine Funktion im Formelfeld 88 definiert, die von dem Pipettiervolumen (im Formelfeld 88 Volumen genannt) abhängt. Das Pipettiervolumen ist hier eine variable Grösse. Das Pipettiervolumen kann zum Beispiel in einem anderen Verfahrensschritt durch den Nutzer oder das Handhabungssystem 100 festgelegt worden sein, oder es kann durch den Gesamtprozess vorgegeben werden.

Gemäss Erfindung ändert sich der nachfolgende Luftpfropfen dynamisch als Funktion des Pipettiervolumens. Hier müssen also keine Anpassungen mehr durch den Nutzer vorgenommen werden.

Das Formel-Untermenü 87 kann bei allen Ausführungsformen für das Aspirieren eine oder mehrere der folgenden Formelfelder aufweisen:

- TAG Formelfeld 88 (Englisch: trailing airgap; der Probe nachfolgender Luftpfropfen) und/oder
- LAG Formelfeld (Englisch: leading airgap; der Probe vorausgehender Luftpfropfen) und/oder
- STAG Formelfeld (Englisch: system trailing airgap; der Systemflüssigkeit nachfolgender Luftpfropfen) und/oder
- Überschussvolumen Formelfeld (Englisch: Excess Volume) und/oder
- Konditionierungsvolumen Formelfeld (Englisch: Conditioning Volume) und/oder
- Pipettiergeschwindigkeit Formelfeld (Englisch: Pipetting Speed) und/oder
- Verzögerung-Formelfeld (Englisch: Delay) und/oder
- Genauigkeitsanpassung Formelfeld (Englisch: Accuracy Adjustment).

Vorzugsweise haben diese Formelfelder, respektive die Funktionen, die innerhalb dieser Formelfelder angegeben sind, bei allen Ausführungsformen eine Abhängigkeit vom Pipettiervolumen (z.B. wie in Fig. 3 gezeigt) und/oder vom Auslasselementtyp.

Vorzugsweise kann man bei allen Ausführungsformen zu mindestens einem der Formelfelder einen Minimal- und einen Maximalwert angeben, wie zum Beispiel in Fig. 4 gezeigt. Bei dem Beispiel in Fig. 4 wurden dem Formelfeld 88 Minimal- und Maximalwerte zugeordnet. Damit wurde im gezeigten Beispiel definiert, dass die Formel des Formelfelds 88 im Bereich von 0 bis 1200 $\mu$l Gültigkeit haben soll. Ansonsten unterscheidet sich die Ausführungsform der Fig. 4 nur dadurch von der Ausführungsform der Fig. 3, dass ein Rechner 60 Teil des Handhabungssystems 100 ist. Der Rechner 60 ist über eine interne Schnittstelle 61 mit dem Bildschirm 81 verbunden. In Bezug auf alle anderen Details wird auf die Beschreibung der Fig. 3 verwiesen.

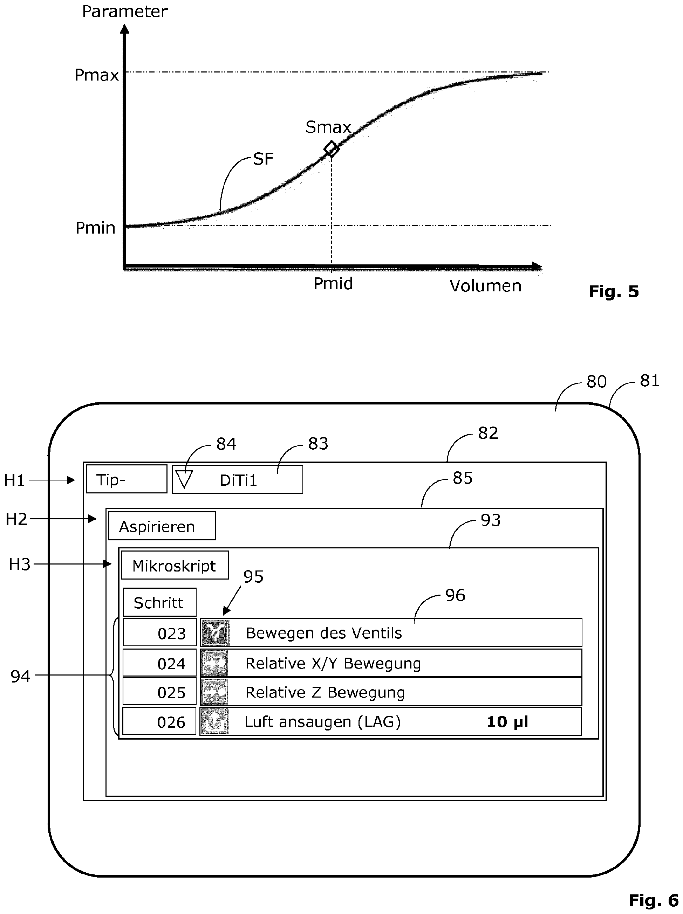

Vorzugsweise wird bei allen Ausführungsformen eine Sigmoid-Funktion SF angeboten oder es kann eine Sigmoid-Funktion SF in einem der Formelfelder eingegeben werden. Eine Sigmoid-Funktion SF ist eine nichtlineare Funktion mit S-förmigem Kurvenverlauf, wie in Fig. 5 anhand eines beispielhaften Graphs gezeigt. Die Sigmoid-Funktion SF eignet sich wegen ihres speziellen Verlaufs besonders zur Definition von Bewegungsabläufen und/oder - zusammenhängen, da sie hilft, abrupte Sprünge oder Veränderungen zu vermeiden.

Die Sigmoid-Funktion SF kann wie folgt dargestellt werden, wobei x für das Pipettiervolumen und f(x) für den Parameter steht, der von x abhängig ist. e ist die eulersche Zahl, a, b, c und d sind Konstanten.

$$f(x) = \frac{a}{1 + be^{cx}} + d$$

Die Sigmoid-Funktion SF hat zwei horizontale Asymptoten Pmax und Pmin, wie in Fig. 5 gezeigt. Wenn bei einer Konstante c < 0 das Volumen x gegen Unendlich geht, so erreicht die Sigmoid-Funktion SF die Asymptote Pmax. Es gilt

$$P\max = a + d$$

Wenn bei einer Konstante c < 0 das Volumen x gegen minus Unendlich geht, so erreicht die Sigmoid-Funktion SF die Asymptote Pmin. Es gilt

$$P\min = d$$

Weiterhin hat die Sigmoid-Funktion SF einen Wendepunkt Smax. In diesem Wendepunkt Smax ist die Steigung am grössten. Es gilt

$$S\max = -\frac{ac}{4}$$

Das entsprechende Pipettiervolumen am Wendepunkt Smax wird mit Pmid bezeichnet.

In Abweichung von der Figur 5 kann der Wendepunkt statt in der Mitte zwischen Pmin und Pmax irgendwo zwischen Pmin und Pmax liegen.

Vorzugsweise wird bei allen Ausführungsformen mindestens in einem der Formelfelder der Zusammenhang zwischen einem der Parameter (z.B. dem Parameter, der die Grösse eines Luftpfropfens definiert) und dem Pipettiervolumen durch eine Sigmoid-Funktion SF definiert, wie in Fig. 5 gezeigt.

So kann man z.B. gemäss einer Ausführungsform der Erfindung die Aspirationsgeschwindigkeit durch eine Sigmoid-Funktion SF definieren, indem man die minimale Geschwindigkeit in µl/s, die maximale Geschwindigkeit in µl/s, das Pipettiervolumen, bei dem die Veränderung der Geschwindigkeit am grössten sein soll in µl und die maximale Geschwindigkeitsänderung in 1/s angibt. Daraus kann man die Konstanten a, b, c und d ermitteln und somit die Sigmoid-Funktion SF in dem entsprechenden Formelfeld definieren.

Gemäss Erfindung werden alle betroffenen Teilschritte dynamisch angepasst, falls in einem der Teilschritte eine wesentliche Änderung vorgenommen wurde. Falls sich also in einem der Teilschritte das Pipettiervolumen x ändern sollte, so passt sich z.B. die Grösse des Luftpfropfens automatisch an, wie in den Figuren 3 und 4 im Formelfeld 88 vorgegeben.

Gemäss Erfindung wird zwischen einem Verfahren zum Definieren einer Abfolge von automatisierten Prozessschritten (z.B. in einem Mikroskript) und der eigentlichen Umsetzung bzw. dem Ausführen der Prozessschritte unterschieden.

Die Anpassungen aufgrund der Abhängigkeit der einzelnen Teilschritte untereinander werden vorzugsweise bei allen Ausführungsformen entweder während des Definierens der Abfolge (d.h. während des Erstellens des Mikroskripts) oder nach dem Beenden (d.h. nach dem Erstellen des Mikroskripts) des Definierens der Abfolge vorgenommen. D.h. zuerst werden die einzelnen Teilschritte definiert und es wird an mindestens einer Stelle eine Funktion vorgegeben, bevor dann abschließend (automatisch) unter Berücksichtigung der Funktion entsprechenden Anpassungen berechnet werden.

Die Anpassungen aufgrund der Abhängigkeit der einzelnen Teilschritte untereinander können aber auch bei allen Ausführungsformen während der Umsetzung bzw. während des Ausführens (d.h. während der Laufzeit) der Prozessschritte erfolgen.

Gemäss Erfindung kommt das folgende Verfahren zum Definieren einer Abfolge von automatisierten Prozessschritten (z.B. in einem Mikroskript) zum Einsatz. Diese Abfolge von automatisierten Prozessschritten wird nach dem Definieren der Abfolge in einem Handhabungssystem 100 unter Einsatz/Kontrolle der Steuerung S ausgeführt. Das Definieren der Abfolge von automatisierten Prozessschritten kann innerhalb des Handhabungssystems 100 (z.B. unter Einsatz oder Mitwirkung der Steuerung S) erfolgen, oder es erfolgt mittels eines anderen Systems, z.B. mit Hilfe eines (separaten) Rechners 60, der über einen Bildschirm 81 mit grafischer (Benutzer-)Oberfläche 80 verfügt, wie in Fig. 3 anhand eines Beispiels angedeutet. Ein (separater) Rechner 60 kann z.B. über eine Schnittstelle 61 mit dem Bildschirm 81 und über eine Schnittstelle 62 mit dem Handhabungssystem 100 verbunden sein. Es ist auch bei allen Ausführungsformen möglich, dass der Rechner 60 samt Bildschirm 81 Teil des Handhabungssystems 100 ist, wie in Fig. 4 angedeutet. Bei der Ausführungsform der Fig. 4 kann die Steuerung S z.B. im Rechner 60 integriert sein.

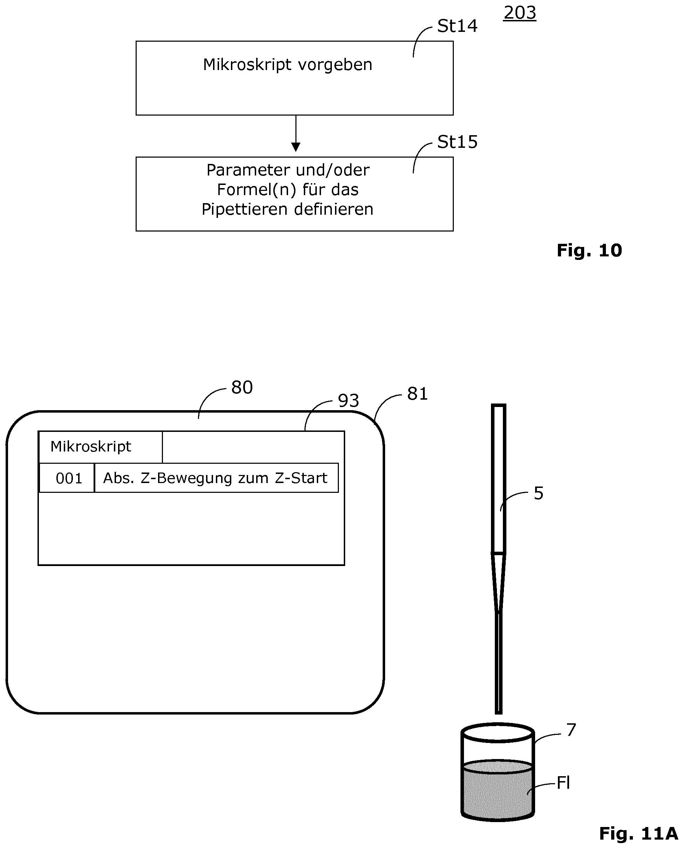

Das Handhabungssystem 100 umfasst bei allen Ausführungsformen mindestens ein Auslasselement 5, das zum Aspirieren und/oder Dispensieren eines Pipettiervolumens x einer Flüssigkeit Fl ausgelegt ist. Ein Beispiel hierzu ist in den Figuren 11A bis 11F dargestellt.

Das Handhabungssystem 100 umfasst bei allen Ausführungsformen einen numerisch gesteuerten Bewegungsapparat 50 zum Ausführen von Relativ- und/oder Absolutbewegungen, die in den Figuren 1 und 2 mit Doppelpfeilen P1, P2, P3 versehen sind. Es handelt sich hierbei um Bewegungen P1, P2, P3, die im Zusammenhang mit dem Aspirieren und/oder Dispensieren erforderlich sind. So kann zum Beispiel in Fig. 1 die Gruppe von Auslasselementen 5 gemeinsam abwärts in Richtung der Mikroplatte 11 bewegt werden.

Das Handhabungssystem 100 umfasst bei allen Ausführungsformen eine Steuerung S, die z.B. ein Teil eines Rechners 60 sein kann, und die zum Steuern der Prozessschritte ausgelegt ist.

Das Verfahren umfasst vorzugsweise bei allen Ausführungsformen die folgenden Schritte:

- Einsetzen einer grafischen Bedieneroberfläche 80 (siehe z.B. Fig. 3, 4 oder 6), um Teilschritte der Prozessschritte zu definieren. Die Bedieneroberfläche 80 ist vorzugsweise so ausgelegt, dass sie es dem Nutzer ermöglicht

  ◦ (direkt oder indirekt) die Auswahl eines Auslasselements 5 (Auswahl eines Auslasselementtyps) vorzunehmen,
  ◦ (direkt oder indirekt) (Flüssigkeitshandhabungs-)Parameter vorzugeben, die von dem Handhabungssystem 100 beim Ausführen eines oder mehrerer der Teilschritte Anwendung finden sollen.

Das Verfahren ist so ausgelegt, dass mindestens ein erster Parameter f(x) von einem zweiten Parameter x (z.B. dem Pipettiervolumen) so abhängig ist, dass der erste Parameter f(x) systemseitig automatisch angepasst wird, falls sich der zweite Parameter x ändert. In den Figuren 3 und 4 ist ein entsprechendes Beispiel gezeigt. In dem Formelfeld 88 wurde der trailing airgap (TAG) durch eine Funktion f(x) definiert, die vom Pipettiervolumen x abhängt.

Das Verfahren der Erfindung umfasst vorzugsweise bei allen Ausführungsformen einen Schritt, der es dem Nutzer ermöglicht (direkt oder indirekt) die Teilschritte der Standardaktion zueinander in eine chronologische Reihenfolge zu bringen, wie beispielhaft in Fig. 6 illustriert. Vorzugsweise erfolgt das Vorgeben einer chronologischen Reihenfolge mittels der grafischen Oberfläche 80 und mittels Eingabemitteln (Tastatur und/oder Maus und/oder berührungsempfindlichem Bildschirm 81) der Steuerung S und/oder eines Rechners 60.

In Fig. 6 ist ein Beispiel der grafischen Oberfläche 80 eines Bildschirms 81 gezeigt, die zum Vorgeben der chronologischen Reihenfolge der Teilschritte geeignet ist. In einem Untermenü 85, das dem Definieren des Aspirierens dient, können in einem Untermenü 93 (z.B. auf der Hierarchieebene H3) die entsprechenden Mittel angezeigt werden. Das Untermenü 93 ist mit dem Titel Mikroskript versehen, da hier das Vorgeben der chronologischen Reihenfolge als mikroskripten (microscripting) bezeichnet wird. Durch Eingaben im Untermenü 93 kann ein Mikroskript definiert werden, oder es kann ein existierendes Mikroskript editiert werden.

Vorzugsweise zeigt die grafische Oberfläche 80 eine Spalte, in der die Teilschritte benannt oder nummeriert sind. Hier ist in dem gezeigten Beispiel eine Schrittsequenz 94 angezeigt. Im gezeigten Moment sind die Schritte 023 bis 026 zu sehen. Jeder Teilschritt kann ein Feld 96 aufweisen, das z.B. ein grafisches Symbol 95 (Icon) und/oder einen beschreibenden Text umfasst.

Vorzugsweise können die Teilschritte bei allen Ausführungsformen durch Drag- und Drop-Aktionen vorgegeben oder geändert werden.

Vorzugsweise können bei allen Ausführungsformen Details der einzelnen Teilschritte definiert werden. Dies kann z.B. dadurch erfolgen, dass der Nutzer durch ein Auswählen eines Teilschritts (z.B. durch einen Doppelklick) in ein entsprechendes Menü gelangt. Als Menü kann so z.B. ein Formel-Untermenü (z.B. analog zu dem Formel-Untermenü 87 der Figuren 3 und 4) bereitgestellt werden. In einem solchen Formel-Untermenü können z.B. die Details eines Bewegungsablaufs angegeben werden.

Im Schritt 025 des Beispiels der Fig. 6 kann zum Beispiel mittels einer Formel definiert werden, dass die Geschwindigkeit der Z-Bewegung (Hubbewegung des Auslasselements 5) aus der Flüssigkeit der Eintauchtiefe unter den mittels LLD detektierten Flüssigkeitsspiegels und der Viskosität der Probe angepasst wird. Ebenfalls wird in dem Schritt definiert, dass die Pipette genügend weit nach oben bewegt wird, damit sie bei Schritt 026 nicht mehr in die Probenflüssigkeit eingetaucht ist.

Durch die Verwendung der Mikroskripte können einfach und schnell die Prozessschritte eines Prozesses definiert werden. Das beschriebene Verfahren ist sehr flexibel und intuitiv.

Vorzugsweise werden bei allen Ausführungsformen die Parameter und/oder Funktionen aus den Mikroskripten heraus ermittelt oder erstellt.

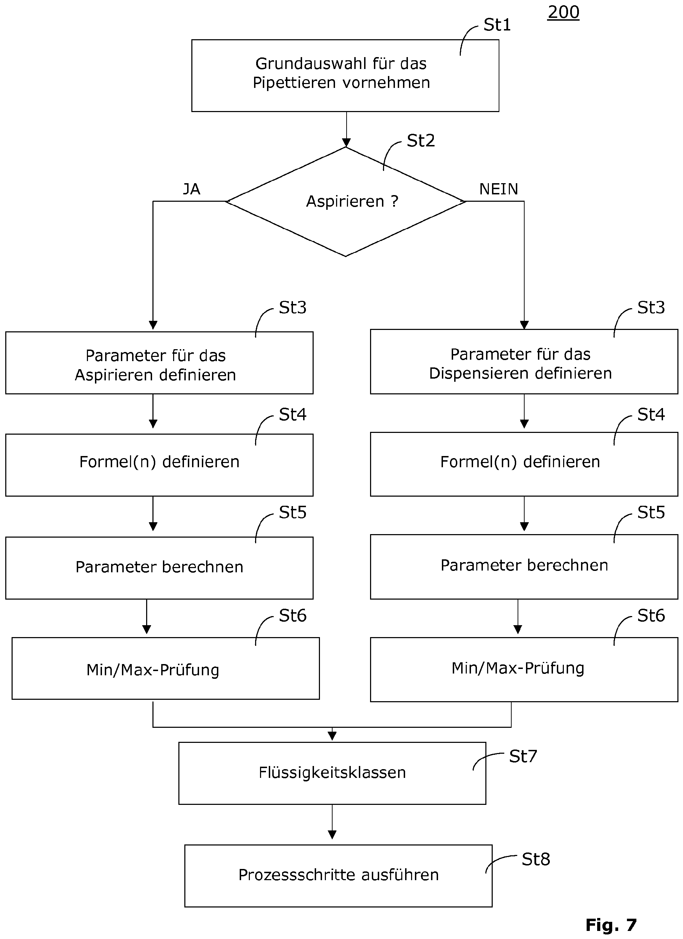

Fig. 7 zeigt ein Flussdiagramm einer Ausführungsform eines Verfahrens 200 der Erfindung. Die einzelnen Schritte des Verfahrens 200 werden hier mit den Bezugszeichen St1, St2, St3 usw. bezeichnet.

In einem ersten Schritt St1 können beispielsweise die grundlegenden Details eines Prozesses definiert werden. Es kann z.B. eine Grundauswahl unter Zuhilfenahme einer grafischen Oberfläche 80 vorgenommen werden. Wie in den Figuren 3 und 4 zu erkennen ist, wurde hier im Rahmen einer Grundauswahl in beiden Fällen der Pipettentyp DiTi1 ausgewählt, wie im Feld 83 angezeigt.

In einem zweiten Schritt St2 kann z.B. eine Auswahl vorgenommen werden, ob ein Aspirier-Prozess oder ein Dispensier-Prozess definiert werden soll. Bei den Ausführungsbeispielen der Figuren 3 und 4 wird daher auf der Hierarchieebene H2 die Auswahl eines Aspirier-Untermenüs 85 oder eines Dispensier-Untermenüs 86 ermöglicht.

In dem Schritt St3 können entweder die Parameter des Aspirier-Prozesses oder des Dispensier-Prozesses definiert werden. In dem Schritt St3 können die zugehörigen Parameter vom Nutzer definiert oder aus einem Speicher geladen werden. Der Schritt St3 ist optional.

In dem Schritt St4 kann mindestens eine Formel definiert werden. In dem Schritt St4 kann die Formel vom Nutzer definiert oder aus einem Speicher geladen werden. Bei den Ausführungsbeispielen der Figuren 3 und 4 wird ein entsprechendes Formelfeld 88 bereitgestellt, um eine Formel zu definieren oder eine vorhandene Formel zu editieren.

In dem Schritt St5 werden die endgültigen Parameter berechnet, die bei der Umsetzung bzw. bei dem Ausführen der Prozessschritte zur Anwendung kommen sollen.

In dem Schritt St6 kann eine Minimum-Prüfung und eine Maximum-Prüfung durchgeführt werden. Bei den Ausführungsbeispiel der Fig. 4 werden zu diesem Zweck ein entsprechendes Minimum-Feld 91 und ein Maximum-Feld 92 bereitgestellt. Der Schritt St6 ist optional.

In dem Schritt St7 können die ermittelten endgültigen Parameter in das Raster einer Flüssigkeitsklasse eingefügt werden. Der Schritt St7 ist optional und kommt vorzugsweise dann zur Anwendung, wenn das unterliegende Handhabungssystem 100 für das Verarbeiten von Flüssigkeitsklassen ausgelegt ist. In diesen Fällen kann das erfindungsgemässe Verfahren auf ein existierendes Handhabungssystem 100 aufgesetzt werden. Das Verfahren der Erfindung ist abwärtskompatibel, wenn es den Schritt St7 umfasst.

In dem Schritt St8 werden die Teilschritte des Aspirier-Prozesses oder des Dispensier-Prozesses in einem Handhabungssystem 100 ausgeführt.

Bei dem Verfahren 200 der Fig. 7 gehören die Schritte St4, St5 und St6 zum dynamischen Teil. D.h. zwischen diesen Schritten St4, St5 und St6 können gegenseitige Abhängigkeiten vorhanden sein. Durch den Einsatz mindestens einer Formel kann es zu Änderungen kommen, die das Handhabungssystem 100 und/oder ein Rechner 60 automatisch vornimmt. Vor dem Ausführen der Teilschritte (Schritt St8) des Aspirier-Prozesses oder des Dispensier-Prozesses sind die Parameter dann endgültig definiert und ändern sich bei dieser Ausführungsform nicht mehr.

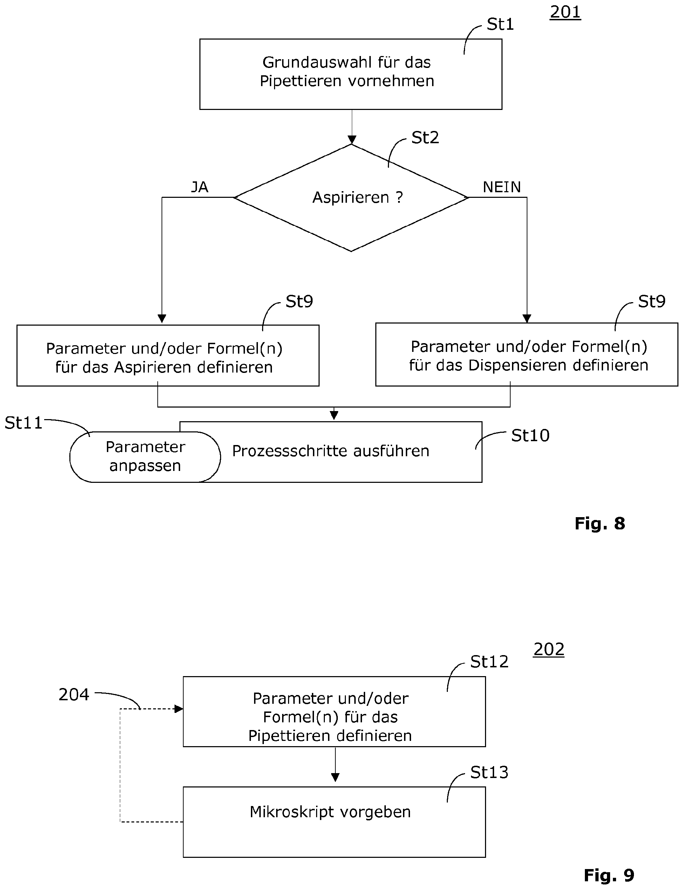

Fig. 8 zeigt ein Flussdiagramm einer Ausführungsform eines weiteren Verfahrens 201 der Erfindung. Die einzelnen Schritte des Verfahrens 201 werden hier mit den Bezugzeichen St1, St2, St3 usw. bezeichnet. Die Schritte St1 und St2 sind gleich oder ähnlich wie in Fig. 7.

In dem Schritt St9 (ähnlich wie in Schritt St3) können entweder die Parameter und/oder Formeln eines Aspirier-Prozesses oder eines Dispensier-Prozesses definiert werden. In dem Schritt St9 können die Parameter oder Formeln vom Nutzer definiert oder aus einem Speicher geladen werden. Es wird im Schritt St9 jeweils mindestens eine Formel vorgegeben.

In dem Schritt St10 (ähnlich wie in Schritt St8) werden die Teilschritte des Aspirier-Prozesses oder des Dispensier-Prozesses im Handhabungssystem 100 ausgeführt. Hier kommt es jedoch zu einer Art dynamischen Anpassung während des Ausführens der Teilschritte, wie in Fig. 8 durch den Schritt Stil angedeutet, der logisch mit dem Schritt St10 verbunden ist, bzw. der mit dem Schritt St10 in Wechselwirkung steht. Die dynamische Anpassung erfolgt während der Laufzeit.

Vorzugsweise werden bei einem Verfahren 201 nach Fig. 8 die endgültigen Parameter erst kurz vor Ausführung eines Teilschritts in einen Arbeitsspeicher abgelegt. Bis zum Moment des Ablegens können die Parameter noch angepasst werden. Damit kann ein solches Verfahren und ein Handhabungssystem 100, in dem dieses Verfahren implementiert ist, auf sich ändernde Bedingungen reagieren. Wenn z.B. in einem Behälter 6 (siehe Fig. 1) kein ausreichendes Volumen einer Flüssigkeit mehr vorhanden ist, so kann das Pipettiervolumen, das in einem nachfolgenden Teilschritt zum Einsatz kommt, reduziert werden (das Reduzieren geschieht nach fest vorgegebenen Regeln und es ist zu beachten, dass es Teilschritte gibt, bei denen das Anpassen des Pipettiervolumens nicht zulässig ist, da es zu Fehlern führen würde). Das Reduzieren des Volumens kann dann wiederum Einfluss haben auf andere Parameter, die vom Volumen abhängig sind. Solche Anpassungen können quasi in Echtzeit oder nahezu in Echtzeit erfolgen.

Fig. 9 zeigt ein Flussdiagramm einer Ausführungsform eines weiteren Verfahrens 202 der Erfindung. Fig. 9 deutet an, dass das Mikroskript-basierte Verfahren zeitlich nach dem Definieren der Parameter und/oder Formeln des Pipettierens ausgeführt wird. Nachdem in einem Schritt St12 alle Parameter und/oder Formeln vorgegeben wurden, kann das Mikroskript-basierte Verfahren im Schritt St13 die Parameter und Formeln zur Anwendung bringen. Wenn man z.B. in einem Schritt 026 das Ansaugen von Luft definiert, um später einen Luftpfropfen (LAG) in einer Pipette 5 zu erzeugen (wie in Fig. 6 gezeigt), so können beim Definieren des Ansaugens der Luft die Parameter angewendet werden, die zuvor im Schritt St 12 definiert wurden.

Vorzugsweise werden beim Ausführen des Mikroskript-basierten Verfahrens im Schritt St13 die entsprechenden Parameter auf der grafischen Oberfläche 80 angezeigt. Wenn ein vorausgehender Luftpfropfen (LAG) z.B. mit einem Parameter von 10 µl im Schritt St 12 definiert wurde, so kann dieser Parameterwert in dem Feld 96 der Fig. 6 angezeigt werden. In Fig. 6 ist dies im Feld 96 des Schrittes 026 beispielhaft gezeigt.

Beim Definieren der Teilschritte unter Anwendung des Mikroskript-basierten Verfahrens (z.B. im Schritt St13) können sich unter Umständen Änderungen ergeben, die einen Einfluss auf andere Parameter oder Teilschritte haben können. Vorzugsweise sind daher alle Ausführungsformen so implementiert, dass es eine Art rechnerische Rückkopplung 204 gibt, wie in Fig. 9 schematisch angedeutet. Die Rückkopplung 204 ist optional.

Fig. 10 zeigt ein Flussdiagramm einer Ausführungsform eines weiteren Verfahrens 202 der Erfindung. Fig. 10 deutet an, dass das Definieren der Parameter und/oder Formeln des Pipettierens zeitlich nach dem Mikroskript-basierten Verfahren ausgeführt wird. Nachdem in einem Schritt St14 das Mikroskript-basierte Verfahren zur Anwendung gebracht wurde, können im Schritt St15 die Parameter und Formeln vorgegeben oder angepasst werden. Eine Rückkopplung 204 ist hier nicht erforderlich.

In den Figuren 11A bis 11F sind beispielhafte Schritte eines Prozesses dargestellt, die in einem Handhabungssystem 100 der Erfindung ausgeführt werden. Links ist in diesen Figuren beispielhaft die grafische Oberfläche 80 eines Bildschirms 81 gezeigt. Rechts neben dem Bildschirm 81 sieht man in schematischer Darstellung jeweils eine Pipette 5 und einen Behälter 7, der mit einer Flüssigkeit Fl gefüllt ist.

Die grafische Oberfläche 80 kann bei allen Ausführungsformen eine Darstellung anzeigen, die Schritt für Schritt den Fortgang des Prozesses darstellt.

Die grafische Oberfläche 80 kann bei allen Ausführungsformen ein Mikroskript-Fenster 93 zeigen, das ähnlich aufgebaut ist wie das Mikroskript-Fenster 93 in Fig. 6. Die Schritt für Schritt-Darstellung des Fortgangs des Prozesses kann bei allen Ausführungsformen aber auch in anderer Form erfolgen.

Fig. 11A zeigt die grafische Oberfläche 80 während eines ersten Aspirier-Schrittes. Die Pipette 5 befindet sich oberhalb des Behälters 7. Während des ersten Aspirier-Schritts wird durch den Bewegungsapparat 50 die Pipette 5 relativ zum Behälter 7 in eine Position gebracht, die mit Z-Start bezeichnet ist. Ab Z-Start wird die Pipette 5 wesentlich langsamer nach unten bewegt als während rein robotischen Bewegungen in X, Y und Z.

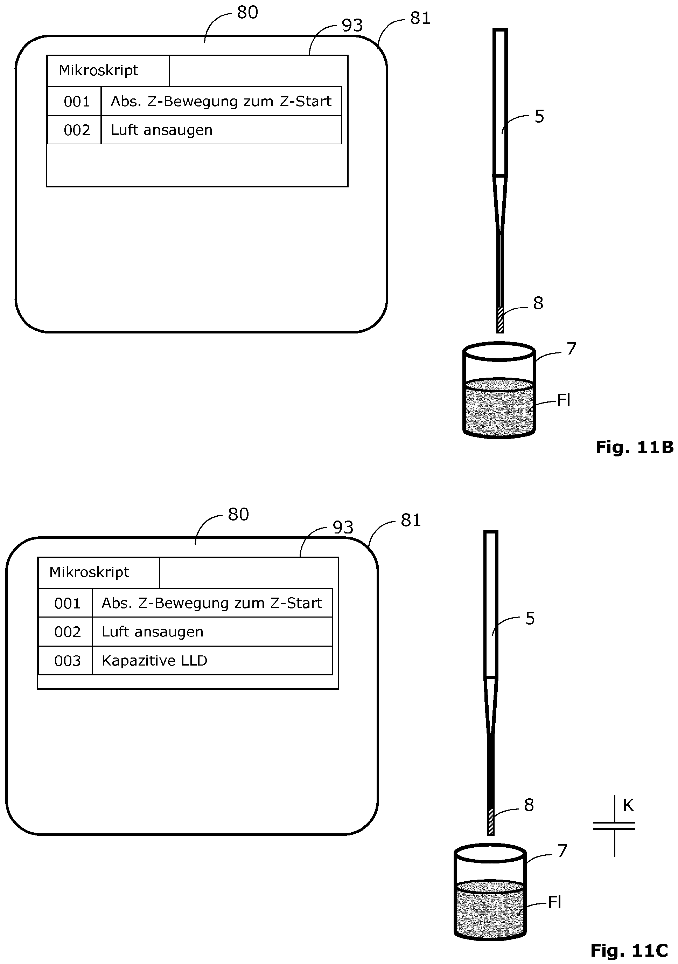

Fig. 11B zeigt die grafische Oberfläche 80 während eines zweiten Aspirier-Schrittes. In diesem Schritt wurde von Luft von der Pipette 5 aspiriert. In Fig. 11B erkennt man einen kleinen Luftpfropfen 8 bestehend aus STAG und LAG am unteren Ende der Pipette 5.

Fig. 11C zeigt die grafische Oberfläche 80 während eines dritten Aspirier-Schrittes. Um ein kapazitives Detektieren des Flüssigkeitsniveaus im Behälter 7 zu ermöglichen, wurde eine entsprechende LLD-Schaltung (durch den Kondensator K symbolisiert) aktiviert. Details einer beispielhaften LLD-Schaltung können der publizierten europäischen Patentanmeldung EP2270445 entnommen werden. LLD steht im Englischen für liquid-level-detection, was Detektion eines Flüssigkeitsniveaus bedeutet. Die Pipette 5 wird anschliessend von Z-Start langsam Richtung Flüssigkeitsoberfläche bewegt.

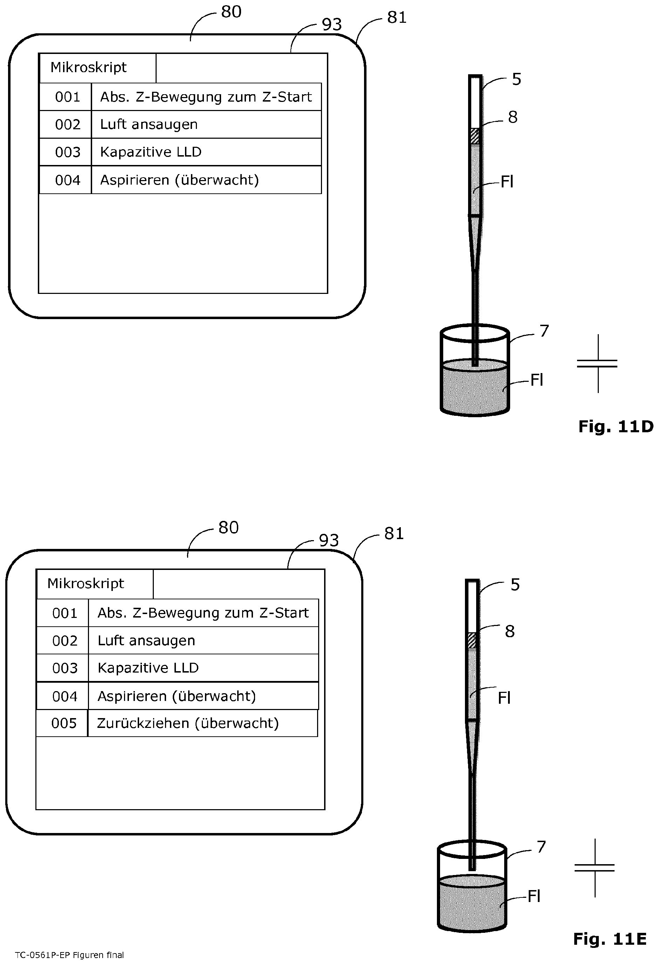

Fig. 11D zeigt die grafische Oberfläche 80 während eines vierten Aspirier-Schrittes. In diesem Schritt wird mit der Pipette 5 Flüssigkeit Fl aus dem Behälter 7 aspiriert. Die Pipette 5 wird vom Bewegungsapparat 50 während des Aspirierens nach unten bewegt, um so dem absinkenden Flüssigkeitsniveau im Behälter 7 zu folgen. Das Aspirieren erfolgt mit kapazitiver LLD Überwachung. Das heisst, falls die Pipette 5 dem während des Aspirierens absinkenden Flüssigkeitsspiegel zu langsam folgen würde, gäbe die LLD-Schaltung Alarm.

Fig. 11E zeigt die grafische Oberfläche 80 während eines fünften Aspirier-Schrittes. In diesem Schritt erfolgt ein LLD-überwachtes Zurückziehen der Pipette 5 aus dem Behälter 7. Ein Signal, das von der LLD-Schaltung (durch den Kondensator K symbolisiert) beobachtet wird, zeigt an sobald die Pipette 5 aus der Flüssigkeit Fl ausgetaucht ist. Das Niveau des Flüssigkeitsspiegels nach dem Aspirieren wird anhand des aspirierten Volumens und der Gefässgeometrie einem Plausibilitätstest unterworfen.

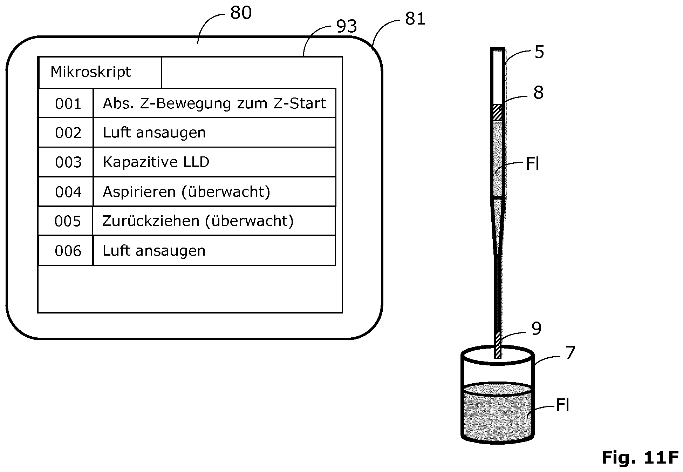

Fig. 11F zeigt die grafische Oberfläche 80 während eines sechsten Aspirier-Schrittes. In diesem Schritt saugt die Pipette 5 erneut Luft an. In Fig. 11F erkennt man einen weiteren kleinen Luftpfropfen 9, der sich am unteren Ende der Pipette 5 befindet. Die Flüssigkeit Fl ist nun in der Pipette 5 von einem vorausgehenden Luftpfropfen 8 (LAG) und von einem nachgehenden Luftpfropfen 9 (TAG) umgeben.

Nun können weitere Schritte folgen. So kann zum Beispiel die Pipette 5 in eine andere Position gebracht werden. Ausgehend von dieser anderen Position können dann z.B. die Teilschritte eines Dispensier-Prozesses folgen. Auch hier kann die grafische Oberfläche 80 die einzelnen Teilschritte anzeigen.

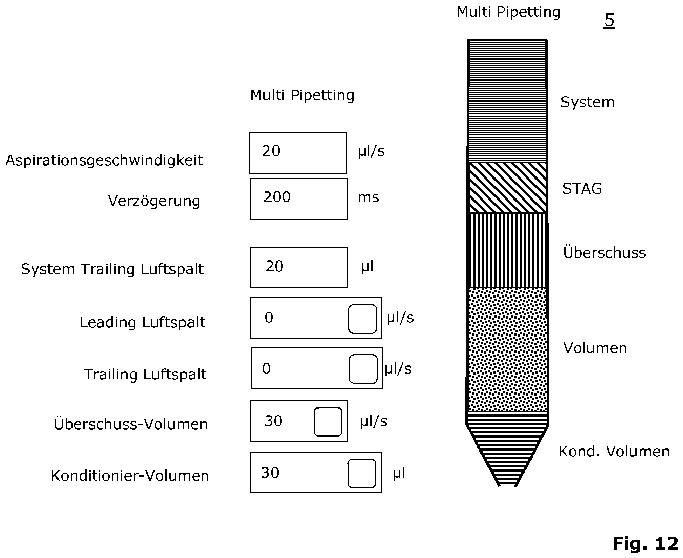

In aktuellen Handhabungssystemen ist der Ablauf eines Pipettiervorganges starr vorgegeben. Die Pipette wird in einem solchen Handhabungssystem auf die Höhe Z-Start bewegt. Das STAG (englisch: system trailing airgap) und das LAG (englisch: leading airgap) werden zusammen durch die Pipette aufgenommen. Die Pipette wird anschliessend mit aktivierter LLD Überwachung langsam nach unten, Richtung Flüssigkeitsoberfläche bewegt, bis der Flüssigkeitsspiegel durch die LLD-Schaltung detektiert wird. Die Pipette wird zusätzlich etwas tiefer in die Flüssigkeit eingetaucht. Darauf wird die Flüssigkeit als Summe aus Überschussvolumen (englisch: Excess), Probenvolumen (Vol.) und Konditioniervolumen (englisch: Cond.) mit einer in der Flüssigkeitsklasse vorgegeben Geschwindigkeit aspiriert. Während des Aspiriervorganges wird die Pipette dem sinkenden Flüssigkeitsniveau nachgeführt. Darauf wird die Pipette langsam wieder aus der Flüssigkeit bis auf Z-Start herausbewegt. Auf Z-Start wird das TAG (englisch: trailing airgap) aufgezogen. Die Reihenfolge der beschriebenen Schritte ist starr vorgegeben und kann nicht verändert werden. Man kann bei bisherigen Systemen höchstens eines der Elemente, die in Fig. 12 gezeigt sind, auf Null setzen.

Der in Fig. 12 rechts gezeigte Aufbau der Flüssigkeitselemente und Luftspalte in einer Pipette ist ebenfalls vorgegeben. Die Volumina der einzelnen Fluidelemente und die Geschwindigkeiten müssen zum Vornherein festgelegt werden und sind während des Pipettierablaufes nicht mehr veränderbar.

Für moderne Handhabungssysteme ist jedoch immer grössere Flexibilität gefordert. So kann es wünschenswert sein, z.B. mehrere verschiedene Flüssigkeiten in eine Pipette getrennt durch Luftpfropfen aufzunehmen. Dies ist mit dem starren Flüssigkeitsklassensystem aus dem Stand der Technik nicht möglich. Eine erfindungsgemässes Handhabungssystem 100 kann man jedoch aufgrund des Einsatzes von Mikroskripten die Reihenfolge einzelner Schritte umstellen, weitere Schritte definieren und einfügen. Wenn es zum Beispiel darum geht eine Flüssigkeit zu aspirieren, die unterhalb einer anderen Flüssigkeitsschicht sitzt, so kann man mittels eines geeigneten Mikroskripts die LLD zweimal aktiveren, um die Phasengrenze der gesuchten Flüssigkeit zu finden. Dort kann dann das Aspirieren vorgenommen werden.

Mit der Erfindung ist es z.B. auch möglich eine erste Flüssigkeit (z.B. eine Pufferlösung) und eine zweite Flüssigkeit (z.B. die eigentliche Probe) zu aspirieren und z.B. einen Luftspalt zwischen den beiden Flüssigkeiten vorzusehen. Die Erfindung bietet hier eine sehr grosse Flexibilität.

<div style="text-align:center">Bezugzeichen:</div>

| | |
|---|---|
| Arbeitstisch | 1 |
| Spritzenpumpe | 2 |
| Leitung | 3 |
| Kolben | 4 |
| Auslasselement (z.B. Pipette, Spritze) | 5 |
| Behälter | 6 |
| Behälter | 7 |

(fortgesetzt)

| | |
|---|---|
| Luftpfropfen | 8 |
| Luftpfropfen | 9 |
| Spritzenzylinder | 10 |
| Mikroplatte | 11 |
| Dreiwegeventil | 12 |
| Systemflüssigkeitsbehälter | 13 |
| Probenhalterung | 21 |
| Bewegungsapparat / Handhabungsrobotor / Antriebsvorrichtung | 50 |
| Rechner | 60 |
| Schnittstelle | 61 |
| Schnittstelle | 62 |
| Grafische Oberfläche | 80 |
| Computerbildschirm | 81 |
| Auswahlstruktur | 82 |
| Aktionsmenü | 83 |
| Pfeil | 84 |
| Untermenü | 85 |
| Untermenü | 86 |
| Formel-Untermenü | 87 |
| Formelfeld | 88 |
| Formelname | 89 |
| Masseinheit | 90 |
| Minimum-Feld | 91 |
| Maximum-Feld | 92 |
| Mikroskript Fenster | 93 |
| Schrittsequenz | 94 |
| Grafische Symbole (Icons) | 95 |
| Feld | 96 |
| Flüssigkeitshandhabungssystem | 100 |
| Verfahren | 200 |
| Verfahren | 201 |
| Verfahren | 202 |
| Verfahren | 203 |
| Rückkopplung | 204 |
| Konstante | a |
| Antriebe | A1, A2, A3 |
| Konstante | b |
| Konstante | c |
| Konstante | d |
| Funktion von x | f(x) |
| Flüssigkeit | Fl |
| Hierarchieebene | H1, H2, H3 |
| Kondensator | K |
| Asymptoten | Pmax, Pmin |

(fortgesetzt)

| | |
|---|---|
| Volumen am Wendepunkt | Pmid |
| Bewegung | P1, P2, P3 |
| Steuerung | S |
| Steuerleitungen | s1, s2 |
| Sigmoid-Funktion | SF |
| Wendepunkt | Smax |
| Schritte | St1, St2, St3,... |
| Volumen | x |

**Patentansprüche**

1. Verfahren zum Definieren eines automatisierten Prozesses, der in einem Flüssigkeitshandhabungssystem (100) auszuführen ist, wobei das Flüssigkeitshandhabungssystem (100) umfasst:

   - ein Auslasselement (5) zum Aspirieren und/oder Dispensieren eines Flüssigkeitsvolumens (x),
   - einen numerisch gesteuerten Bewegungsapparat (50) zum Ausführen von Bewegungen (P1, P2, P3) im Zusammenhang mit dem Aspirieren und/oder Dispensieren,
   - eine Steuerung (S) zum Steuern des Prozesses,
   - eine grafische Bedieneroberfläche (80) zur Anzeige und/oder Definition von Parametern zur Ausführung des Prozesses, und
   - ein Parameterset, mit welchem die Steuerung (S) den Prozess, der in dem Flüssigkeitshandhabungssystem (100) ausgeführt werden soll, steuert, wobei Parameter dieses Parametersets beim Ausführen eines oder mehrerer Teilschritte des Prozesses angewendet werden und mittels der graphischen Bedieneroberfläche (80) durch den Nutzer direkt zu definierende Parameter sind,

   **dadurch gekennzeichnet, dass** in der graphischen Bedieneroberfläche (80) zumindest eine Formel bereitgestellt wird, mit welcher zumindest ein durch den Nutzer direkt zu definierender erster Parameter (f(x)) mit einem anderen durch den Nutzer direkt zu definierenden zweiten Parameter (x) in eine funktionale Abhängigkeit gebracht wird, so dass der erste Parameter (f(x)) - statt dass er durch den Benutzer zu definieren ist - systemseitig automatisch angepasst wird, falls sich der zweite Parameter (x) ändert.

2. Verfahren nach Anspruch 1, **dadurch gekennzeichnet, dass** die Bedieneroberfläche (80) es dem Nutzer ermöglicht, in einem ersten Schritt eine Grundauswahl für einen oder mehr Parameter direkt vorzunehmen, vorzugsweise die Auswahl des Auslasselements (5).

3. Verfahren nach Anspruch 1 oder 2, **dadurch gekennzeichnet, dass** in einem Verfahrensschritt im Bereich der Bedieneroberfläche (80) ein Formelfeld (88) so bereitgestellt wird, dass

   - der Nutzer die Formel in dieses Formelfeld (88) eingeben kann, und/oder
   - dass der Nutzer die Formel aus einer Formelsammlung auswählen und in dieses Formelfeld (88) übernehmen kann, und/oder
   - dass der Nutzer die Formel, die systemseitig in dem Formelfeld (88) vorgegeben wird, editieren kann.

4. Verfahren nach Anspruch 3, **dadurch gekennzeichnet, dass** dem Nutzer in einem Verfahrensschritt ermöglicht wird zu dem Formelfeld (88) und/oder zu der Formel einen Minimumwert (Pmin) und einen Maximumwert (Pmax) anzugeben.

5. Verfahren nach Anspruch 3, **dadurch gekennzeichnet, dass** dem Nutzer in einem Verfahrensschritt ermöglicht wird eine Sigmoid-Funktion (SF) vorzugeben.

6. Verfahren nach Anspruch 5, **dadurch gekennzeichnet, dass** dem Nutzer in einem Verfahrensschritt ermöglicht wird zu der Sigmoid-Funktion (SF) mindestens eine Konstante (a, b, c, d) anzugeben, um die Eigenschaften der Sigmoid-Funktion (SF) zu definieren.

**7.** Verfahren nach Anspruch 1 oder 3, **dadurch gekennzeichnet, dass** dem Nutzer in einem Verfahrensschritt ermöglicht wird die Teilschritte zueinander in eine chronologische Reihenfolge zu bringen.

**8.** Verfahren nach einem der vorhergehenden Ansprüche, **dadurch gekennzeichnet, dass** in einem parallelen oder zeitlich nachfolgenden Schritt eine rechnerische Anpassung zwischen zwei Teilschritten vorgenommen wird, falls diese beiden Teilschritte voneinander abhängig sind.

**9.** Verfahren nach einem der Ansprüche 2 bis 7, **dadurch gekennzeichnet, dass** die Formel eingesetzt wird, um eine rechnerische Anpassung zwischen zwei Teilschritten und/oder des ersten Parameters (f(x)) vorzunehmen.

**10.** Verfahren nach einem der vorhergehenden Ansprüche, **dadurch gekennzeichnet, dass** in einem zeitlich nachfolgenden Schritt eine rechnerische Simulation durchgeführt wird.

**11.** Verfahren nach einem der Ansprüche 1 bis 9, **dadurch gekennzeichnet, dass** in einem zeitlich nachfolgenden Schritt (St5) endgültige Parameter berechnet werden.

**12.** Verfahren nach Anspruch 1 zum Ausführen eines Pipettierprozesses in dem Flüssigkeitshandhabungssystem (100), **dadurch gekennzeichnet, dass**

- die grafische Bedieneroberfläche (80) eingesetzt wird, um es einem Nutzer zu ermöglichen Teilschritte des Pipettierprozesses zueinander in eine chronologische Reihenfolge zu bringen, und
- die grafische Bedieneroberfläche (80) und die Formel eingesetzt werden, um es einem Nutzer zu ermöglichen eine Abhängigkeit eines ersten der Teilschritte von einem zweiten der Teilschritte so vorzugeben, dass sich der erste der Teilschritte ändert nachdem sich in dem zweiten der Teilschritte eine Änderung ergeben hat.

**13.** Verfahren nach Anspruch 12, **dadurch gekennzeichnet, dass** eine Sigmoid-Funktion (SF) als Formel dient.

**14.** Verfahren nach Anspruch 13, **dadurch gekennzeichnet, dass** in einem Verfahrensschritt zu der Sigmoid-Funktion (SF) mindestens eine Konstante (a, b, c, d) angegeben werden kann, um die Eigenschaften der Sigmoid-Funktion (SF) zu definieren.

**15.** Verfahren nach einem der vorhergehenden Ansprüche, **dadurch gekennzeichnet, dass** das Parameterset durch eine von einem Nutzer auswählbare Flüssigkeitsklasse bereitgestellt wird, mit welcher ein Pipettierprozess für spezifische Flüssigkeiten definierbar ist.

**Claims**

**1.** Method for defining an automated process which is to be carried out in a liquid handling system (100), wherein the liquid handling system (100) comprises

- an outlet element (5) for aspirating and/or dispensing a liquid volume (x),
- a numerically controlled movement apparatus (50) for carrying out movements (P1, P2, P3) in connection with the aspirating and/or dispensing,
- a controller (S) for controlling the process,
- a graphic user interface (80) for displaying and/or defining parameters for carrying out the process, and
- a set of parameters using which the controller (S) controls the process which shall be carried out in the liquid handling system (100), wherein parameters of this parameter set are used during execution of one or more substeps of the process, and are to be defined directly by a user using the graphic user interface (80),

**characterized in that** at least one formula is provided in the graphic user interface (80), said formula being configured to bring at least a first parameter (f(x)), which is to be directly defined by a user, into a functional dependency from a second parameter (x), which is also to be defined directly by a user,
so that the first parameter (f(x)) is - instead of being to be defined by a user - adjusted automatically by the system if the second parameter (x) changes.

**2.** Method according to claim 1, **characterized in that** the graphic user interface (80) allows the user to make in a first step a basic selection of one or more parameters, preferably a selection of an outlet element (5).

3. Method according to claim 1 or 2, **characterized in that** a formula field (88) is provided in a process step in the region of the graphic user interface (80) in such a way that

- the user can enter the formula in said formula field (88), and/or
- the user is able to select the formula from a collection of formulas and can transfer it in the formula field (88), and/or
- the user can edit the formula which is predetermined by the system in the formula field (88).

4. Method according to claim 3, **characterized in that** the user is enabled in a process step to enter a minimum value (Pmin) and a maximum value (Pmax) with respect to the formula field (88) and/or the formula.

5. Method according to claim 3, **characterized in that** the user is enabled in a process step to predetermine a sigmoid function (SF).

6. Method according to claim 5, **characterized in that** the user is enabled in a process step to provide at least one constant (a, b, c, d) to the sigmoid function (SF) for defining the properties of the sigmoid function (SF).

7. Method according to claim 1 or 3, **characterized in that** the user is enabled in a process step to bring the substeps into a chronological sequence with respect to each other.

8. Method according to one of the preceding claims, **characterized in that** a computational adjustment between two substeps is carried out in a parallel or temporally subsequent step if said two substeps are dependent on each other.

9. Method according to one of the claims 2 to 7, **characterized in that** the formula is used for carrying out a computational adjustment between two substeps and/or the first parameter (f(x)).

10. Method according to one of the preceding claims, **characterized in that** a computational simulation is carried out in a temporally subsequent step.

11. Method according to one of the claims 1 to 9, **characterized in that** the final parameters are calculated in a temporally subsequent step (St5).

12. Method according to claim 1 for carrying out a pipetting process in the liquid handling system (100), **characterized in that**

- the graphic user interface (80) is used to allow a user to bring substeps of the pipetting process into a chronological sequence with respect to each other, and
- the graphic user interface (80) and the formula is used to allow a user to define a dependence of a first one of the substeps on a second one of substeps in such a way that the first one of the substeps changes when a change has occurred in the second one of the substeps.

13. Method according to claim 12, **characterized in that** a sigmoid function (SF) is used as a formula.

14. Method according to claim 13, **characterized in that** in a process step, at least one constant (a, b, c, d) can be specified for the sigmoid function (SF) in order to define the properties of the sigmoid function (SF).

15. Method according to one of the preceding claims, **characterized in that** the set of parameters is provided by a liquid class, said liquid class being selectable by a user and defining a pipetting process for specific liquids.

**Revendications**

1. Procédé destiné à définir un processus automatisé qui doit être réalisé dans un système de manipulation de liquide (100), le système de manipulation de liquide (100) comprenant :

- un élément de sortie (5) pour aspirer et/ou distribuer un volume de liquide (x),
- un appareil de déplacement à commande numérique (50) pour effectuer des déplacements (P1, P2, P3) en lien avec l'aspiration et/ou la distribution,

- une commande (S) pour commander le processus,
- une interface utilisateur graphique (80) pour afficher et/ou définir les paramètres pour effectuer le processus, et
- un ensemble de paramètres, avec lequel la commande (S) commande le processus qui doit être réalisé dans le système de manipulation de liquide (100), des paramètres de cet ensemble de paramètres étant appliqués lorsqu'on effectue une ou plusieurs étapes du processus et étant des paramètres devant être définis directement par l'utilisateur au moyen de l'interface utilisateur graphique (80),

**caractérisé en ce qu'**il est fourni dans l'interface utilisateur graphique (80) au moins une formule avec laquelle est amené dans une dépendance fonctionnelle au moins un premier paramètre (f(x)) devant être défini directement par l'utilisateur avec un deuxième paramètre (x) devant être défini directement par l'utilisateur, de sorte que le premier paramètre (f(x)), au lieu d'être défini par l'utilisateur, est adapté automatiquement par le système lorsque le deuxième paramètre (x) est modifié.

2. Procédé selon la revendication 1, **caractérisé en ce que** l'interface utilisateur (80) permet à l'utilisateur, dans une première étape, de sélectionner directement un ou plusieurs paramètres, de préférence de sélectionner l'élément de sortie (5).

3. Procédé selon la revendication 1 ou 2, **caractérisé en ce que**, dans une étape du procédé, il est fourni dans la zone de l'interface utilisateur (80) un champ de formule (88) de sorte que

- l'utilisateur peut saisir la formule dans ce champ de formule (88), et/ou
- l'utilisateur peut sélectionner la formule à partir d'une liste de formules et peut la reprendre dans ce champ de formule (88), et/ou
- l'utilisateur peut éditer la formule qui est définie par le système dans le champ de formule (88).

4. Procédé selon la revendication 3, **caractérisé en ce qu'**il est permis à l'utilisateur, dans une étape du procédé, d'indiquer dans le champ de formule (88) et/ou dans la formule une valeur minimum (Pmin) et une valeur maximum (Pmax).

5. Procédé selon la revendication 3, **caractérisé en ce qu'**il est permis à l'utilisateur, dans une étape du procédé, de spécifier une fonction sigmoïde (SF).

6. Procédé selon la revendication 5, **caractérisé en ce qu'**il est permis à l'utilisateur, dans une étape du procédé, d'indiquer pour la fonction sigmoïde (SF) au moins une constante (a, b, c, d) pour définir les propriétés de la fonction sigmoïde (SF).

7. Procédé selon la revendication 1 ou 3, **caractérisé en ce qu'**il est permis à l'utilisateur, dans une étape du procédé, de mettre les étapes dans l'ordre chronologique les unes par rapport aux autres.

8. Procédé selon l'une des revendications précédentes, **caractérisé en ce que**, dans une étape parallèle ou consécutive dans le temps, il est procédé à un ajustement mathématique entre deux étapes, dans le cas où ces deux étapes sont interdépendantes.

9. Procédé selon l'une des revendications 2 à 7, **caractérisé en ce qu'**on utilise la formule pour procéder à l'ajustement mathématique entre deux étapes et/ou le premier paramètre (f(x)).

10. Procédé selon l'une des revendications précédentes, **caractérisé en ce qu'**il est réalisé dans une étape consécutive dans le temps une simulation mathématique.

11. Procédé selon l'une des revendications 1 à 9, **caractérisé en ce qu'**il est calculé, dans une étape consécutive dans le temps (St5), les paramètres définitifs.

12. Procédé selon la revendication 1 pour réaliser un processus de pipetage dans le système de manipulation de liquide (100), **caractérisé en ce que** :

- l'interface utilisateur graphique (80) est utilisée pour permettre à l'utilisateur de mettre les étapes du processus de pipetage dans un ordre chronologique, et
- l'interface utilisateur graphique (80) et la formule sont utilisées pour permettre à l'utilisateur de définir une dépendance d'une première étape par rapport à une deuxième étape, de sorte que la première étape change après que la deuxième étape a été modifiée.

13. Procédé selon la revendication 12, **caractérisé en ce qu'**il est utilisé comme formule une fonction sigmoïde (SF).

14. Procédé selon la revendication 13, **caractérisé en ce que**, dans une étape du procédé, il peut être indiqué au niveau de la fonction sigmoïde (SF) au moins une constante (a, b, c, d) pour définir les propriétés de la fonction sigmoïde (SF).

15. Procédé selon l'une des revendications précédentes, **caractérisé en ce que** l'ensemble de paramètres est fourni par une classe de liquide pouvant être sélectionnée par l'utilisateur, avec laquelle on peut définir un processus de pipetage pour des liquides spécifiques.

Fig. 1

Fig. 2

H1 → Tip-Typ    ▽ DiTi1

H2 → Aspirieren

H3 → Formel(n)

H4 → TAG    runden(3.5/1+54*exp(0.8***Volumen**))    [µl]

89    90

86

H2 → Dispensieren

80  81
82
84  83
85
87
88

61
60
62
100

**Fig. 3**

100

80  81

84   83   82

85

H1 → Tip-Typ    ▽   DiTi1

H2 → Aspirieren

87

H3 → Formel(n)

89    88   90

H4 → TAG    runden(3.5/1+54*exp(0.8***Volumen**))    [µl]

Min    0    Max    1200

91    92

H2 → Dispensieren

86

61

60

**Fig. 4**

Fig. 5

Fig. 6

200

St1

Grundauswahl für das
Pipettieren vornehmen

St2

JA     Aspirieren ?     NEIN

St3

Parameter für das
Aspirieren definieren

St4

Formel(n) definieren

St5

Parameter berechnen

St6

Min/Max-Prüfung

St3

Parameter für das
Dispensieren definieren

St4

Formel(n) definieren

St5

Parameter berechnen

St6

Min/Max-Prüfung

St7

Flüssigkeitsklassen

St8

Prozessschritte ausführen

**Fig. 7**

201

St1

Grundauswahl für das
Pipettieren vornehmen

St2

JA          Aspirieren ?          NEIN

St9

Parameter und/oder Formel(n)
für das Aspirieren definieren

St9

Parameter und/oder Formel(n)
für das Dispensieren definieren

St11

Parameter
anpassen

Prozessschritte ausführen

St10

**Fig. 8**

202

St12

204

Parameter und/oder
Formel(n) für das
Pipettieren definieren

St13

Mikroskript vorgeben

**Fig. 9**

203

St14

Mikroskript vorgeben

St15

Parameter und/oder
Formel(n) für das
Pipettieren definieren

**Fig. 10**

80    93    81

| Mikroskript | |
|---|---|
| 001 | Abs. Z-Bewegung zum Z-Start |

5

7

Fl

**Fig. 11A**

| Mikroskript | |
|---|---|
| 001 | Abs. Z-Bewegung zum Z-Start |
| 002 | Luft ansaugen |

**Fig. 11B**

| Mikroskript | |
|---|---|
| 001 | Abs. Z-Bewegung zum Z-Start |
| 002 | Luft ansaugen |
| 003 | Kapazitive LLD |

**Fig. 11C**

80    93    81

| Mikroskript | |
|---|---|
| 001 | Abs. Z-Bewegung zum Z-Start |
| 002 | Luft ansaugen |
| 003 | Kapazitive LLD |
| 004 | Aspirieren (überwacht) |

5

8

Fl

7

Fl

**Fig. 11D**

80    93    81

| Mikroskript | |
|---|---|
| 001 | Abs. Z-Bewegung zum Z-Start |
| 002 | Luft ansaugen |
| 003 | Kapazitive LLD |
| 004 | Aspirieren (überwacht) |
| 005 | Zurückziehen (überwacht) |

5

8

Fl

7

Fl

**Fig. 11E**

| Mikroskript | |
|---|---|
| 001 | Abs. Z-Bewegung zum Z-Start |
| 002 | Luft ansaugen |
| 003 | Kapazitive LLD |
| 004 | Aspirieren (überwacht) |
| 005 | Zurückziehen (überwacht) |
| 006 | Luft ansaugen |

**Fig. 11F**

Multi Pipetting

5

Multi Pipetting

| | | |
|---|---|---|
| Aspirationsgeschwindigkeit | 20 | µl/s |
| Verzögerung | 200 | ms |
| System Trailing Luftspalt | 20 | µl |
| Leading Luftspalt | 0 | µl/s |
| Trailing Luftspalt | 0 | µl/s |
| Überschuss-Volumen | 30 | µl/s |
| Konditionier-Volumen | 30 | µl |

System

STAG

Überschuss

Volumen

Kond. Volumen

**Fig. 12**

**EP 2 945 033 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5841959 A
- DE 10353838 A1
- EP 2713166 A1
- EP 0259386 A
- EP 2270445 A